(19) Europäisches Patentamt
European Patent Office
Office européen des brevets

(11) **EP 2 882 296 B1**

(12) **EUROPÄISCHE PATENTSCHRIFT**

(45) Veröffentlichungstag und Bekanntmachung des Hinweises auf die Patenterteilung:
**25.04.2018   Patentblatt 2018/17**

(21) Anmeldenummer: **13744528.4**

(22) Anmeldetag: **31.07.2013**

(51) Int Cl.:
*A22C 17/00* (2006.01)          *G05B 17/02* (2006.01)
*G06F 17/10* (2006.01)          *A22C 25/16* (2006.01)
*A22C 25/00* (2006.01)

(86) Internationale Anmeldenummer:
**PCT/EP2013/066076**

(87) Internationale Veröffentlichungsnummer:
**WO 2014/023626 (13.02.2014 Gazette 2014/07)**

(54) **VERFAHREN UND VORRICHTUNG ZUR ÜBERWACHUNG EINER FLEISCHVERARBEITUNGSMASCHINE**

METHOD AND DEVICE FOR MONITORING A MEAT PROCESSING MACHINE

PROCÉDÉ ET DISPOSITIF DE SURVEILLANCE D'UNE MACHINE DE TRANSFORMATION DE VIANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2012   DE 102012107278**

(43) Veröffentlichungstag der Anmeldung:
**17.06.2015   Patentblatt 2015/25**

(73) Patentinhaber: **Nordischer Maschinenbau Rud. Baader GmbH + Co. KG 23560 Lübeck (DE)**

(72) Erfinder:
• **JACOBSEN, Ulf 23611 Bad Schwartau (DE)**
• **PEDERSEN, Henning B. 7430 Ikast (DK)**

(74) Vertreter: **Stork Bamberger Patentanwälte PartmbB Meiendorfer Strasse 89 22145 Hamburg (DE)**

(56) Entgegenhaltungen:
US-A- 5 184 733          US-A- 6 164 174
US-A1- 2006 171 581

## Beschreibung

Die Erfindung betrifft ein Verfahren zur Überwachung einer Fleischverarbeitungsmaschine mit einer Fleischverarbeitungseinheit zur Verarbeitung von dieser zugeführten Eingangsfleischprodukten, einer Eingangssensoreinheit und einer Steuerungseinheit zum Steuern der Fleischverarbeitungseinheit, wobei die Steuerungseinheit mit der Eingangssensoreinheit verbunden ist.

Des Weiteren betrifft die Erfindung eine Fleischverarbeitungsmaschine zur Fleischverarbeitung mit einer Fleischverarbeitungseinheit zur Verarbeitung von dieser zugeführten Eingangsfleischprodukten, einer Eingangssensoreinheit, und einer Steuerungseinheit zum Steuern der Fleischverarbeitungseinheit, wobei die Steuerungseinheit mit der Eingangssensoreinheit verbunden ist.

Solche Vorrichtungen und Verfahren kommen in unterschiedlichen Bereichen der Fleisch verarbeitenden Industrie, insbesondere der Fischverarbeitung oder Geflügelverarbeitung, zum Einsatz, in denen unverarbeitete oder auch teilweise vorverarbeitete Fleischprodukte automatisiert verarbeitet werden. Als Fleischprodukte können Tierkörper oder zumindest Teile von Tierkörpern, insbesondere von Geflügel, Fischen, Schweinen, Rindern und/oder dergleichen, angesehen werden. Fleischprodukte können somit beispielsweise Fischkörper oder Geflügelkörper sein. Grundsätzlich können Fleischverarbeitungseinheiten Fleischprodukt aus unterschiedlichen Kategorien, Formen oder Gewichtsbereichen verarbeiten. Die Fleischverarbeitungsmaschine kann dazu auch mehrere Fleischverarbeitungseinheiten umfassen. Für die unterschiedlichen noch zu verarbeitenden Fleischprodukte wird die jeweilige Fleischverarbeitungseinheit jeweils entsprechend angepasst. Dazu wird das noch zu verarbeitende Fleischprodukt vermessen, insbesondere dessen Höhe, Breite und/oder Länge. Entsprechend dieser Messergebnisse werden die Maschinenparameter der Fleischverarbeitungseinheit eingestellt. So können beispielsweise bei Fischverarbeitungseinheiten die Messerabstände von Bauchmessern, Flankenmessern oder Rückenmessern in Abhängigkeit der Rumpfhöhe des noch zu verarbeitenden Fisches eingestellt werden. Üblicherweise werden solche Einstellungen der Fleischverarbeitungseinheit, wie beispielsweise die Messerabstände, Maschinenparameter genannt. Sind die Maschinenparameter auf das zu verarbeitende Fleischprodukt eingestellt, wird danach das Fleischprodukt durch die Fleischverarbeitungseinheit verarbeitet. Nicht zuletzt für die Vermarktung des verarbeiteten Fleischproduktes werden diese nach der Verarbeitung gemessen. Bevorzugt werden hierbei die Länge, die Breite, die Höhe und/oder das Gewicht des Fleischproduktes gemessen.

Zum besseren Verständnis der Erfindung wird im Folgenden das einer Fleischverarbeitungseinheit zugeführte Fleischprodukt als Eingangsfleischprodukt bezeichnet. Durch die Verarbeitung entstehen oftmals neben den Fleischprodukten, die ausgebeutet bzw. gewonnen werden sollen, auch weitere Fleischprodukte, die nicht ausgebeutet werden sollen. Im Weiteren soll der Anteil des verarbeiteten Fleischproduktes, dessen Ziel es ist mittels der Fleischverarbeitungseinheit ausgebeutet oder gewonnen zu werden, als Ausgangsfleischprodukt bezeichnet werden. Der restliche Anteil des verarbeiteten Fleischproduktes soll als Trägerprodukt und/oder Trim bezeichnet werden. Dabei muss das Trägerprodukt nicht zwingend als Träger für das Ausgangsfleischprodukt dienen. Vielmehr kann das Trägerprodukt auch Eingeweide oder andere Teile umfassen.

Zum Verarbeiten von Fisch kann die Fleischverarbeitungseinheit als Fischverarbeitungseinheit ausgestaltet sein, um das Filetfleisch eines der Fischverarbeitungseinheit zugeführten Fischrumpfes von dem Grätengerüst zu trennen. Das Eingangsfleischprodukt wäre in diesem Fall der Fischrumpf. Das Ausgangsfleischprodukt wäre hierbei das ausgebeutete Filetfleisch. Der restliche Teil des Fischrumpfes wäre das Trägerprodukt beziehungsweise der Trim.

Aus der DE 4204843 A1 sind ein Verfahren und eine Vorrichtung zum Bestimmen des Volumens, der Form oder des Gewichts von Fisch oder anderen Objekten bekannt. Danach wird zur Bestimmung des Volumens, der Form oder des Gewichts von Fischen von jedem Fisch, der zunächst auf einem Förderband transportiert wird, eine Bilderserie der Umrisse des Fisches mit einer Kamera aufgenommen. Anschließend wird das Volumen des Fisches oder sein Gewicht mit einem Mikroprozessor auf der Basis der empfangenen Bilddaten berechnet. Aus der Bilderserie der Kamera entsteht ein zusammengesetztes Bild des Fisches mit vielen Querschnitten, wobei die Breite und die maximale Dicke des jeweiligen Fisches in jedem Querschnitt gemessen werden. Das Volumen des Fisches wird durch Multiplizieren des Querschnittsbereiches mit der Geschwindigkeit des Förderbandes und der Zeit zwischen den einzelnen Bildern erhalten. Das Gewicht des Fisches wird dann durch Multiplizieren des Volumens mit dem spezifischen Gewicht der zu wiegenden Fischart erhalten.

Aus dem Stand der Technik ist es also bekannt, dass zu verarbeitende Fischprodukte vor ihrer Verarbeitung durch Sensoren vermessen werden, und dass aus diesen Sensordaten auf das Volumen oder das Gewicht des zu verarbeitenden Fisches geschlossen werden kann.

Außerdem ist bekannt, dass das Ausgangsfleischprodukt vermessen wird, um so auf das Gewicht des Ausgangsfleischproduktes zu schließen. Es kann jedoch keine Aussage darüber getroffen werden, ob das Ausgangsfleischprodukt demjenigen Anteil des Eingangsfleischproduktes entspricht, der durch die Fleischverarbeitungseinheit hätte gewonnen werden können oder ob und zu welchen Maß es zu Abweichungen gekommen ist. Vielmehr werden oft nur Messdaten des Eingangsfleischproduktes und/oder des Ausgangsfleischproduktes erfasst.

Aus dem US 6 164 174 ist ein Steuerverfahren zum Verteilen von Fleisch in Portionen auf Basis einer geschätzten Gewichtsverteilung der Objekte bekannt. Vor dem Zerteilen werden Gewichts- und Bilddaten gewonnen, um die Gewichtsverteilung bestimmen zu können. Ausgehend von dieser Gewichtsverteilung erfolgt das Zerteilen des Fleisches in die gewünschten Portionsgrößen.

Zur Verdeutlichung soll die Problemstellung an dem folgenden Beispiel erläutert werden. Durch die Fleischverarbeitungseinheit kann ein Fleischfilet (hier das gewünschte Ausgangsfleischprodukt) von den Knochen oder Gräten des Eingangsfleischprodukts getrennt werden. Die Trennung erfolgt jedoch zu einem gewissen Grad. Meistens verbleiben noch Fleischreste an den Knochen oder Gräten, so dass in den seltensten Fällen eine vollständige Trennung erfolgt. Wie gut jedoch eine Ausbeutung des Eingangsfleischproduktes erfolgt, hängt von diversen Faktoren ab. Dies ist zum einen der Aufbau des Fisches selbst aber auch die Struktur und der Aufbau der Fleischverarbeitungseinheit. Kann die Fleischverarbeitungseinheit aufgrund physikalischer Limitierungen das zuvor genannte Filetfleisch auch bei optimalen Einstellungen nicht vollständig von den Knochen oder Gräten des Eingangsfleischproduktes trennen, stellt dies keinen Fehler der Fleischverarbeitungseinheit dar. Aus der Kenntnis über das Eingangsfleischprodukt und das daraus verarbeitete Ausgangsfleischprodukt ist deshalb nur schwer eine Aussage darüber möglich, ob eine fehlerhafte Einstellung der Fleischverarbeitungseinheit oder ein sonstiger Fehler der Fleischverarbeitungsmaschine vorliegt.

Der Erfindung liegt deshalb die Aufgabe zugrunde, ein Verfahren und eine Vorrichtung zu schaffen, mit dem beziehungsweise mit der die Ergebnisse einer Verarbeitung von Fleischprodukten mittels einer Fleischverarbeitungsmaschine beziehungsweise einer Fleischverarbeitungseinheit objektiv überwacht werden können.

Gelöst wird die Aufgabe durch ein Verfahren zur Überwachung einer Fleischverarbeitungsmaschine mit einer Fleischverarbeitungseinheit zur Verarbeitung von dieser zugeführten Eingangsfleischprodukten zu Ausgangsfleischprodukten, einer Eingangssensoreinheit, und einer Steuerungseinheit zur Steuerung der Fleischverarbeitungseinheit, wobei die Steuerungseinheit mit der Eingangssensoreinheit verbunden ist, umfassend die Schritte: Zuführen von Eingangsfleischprodukten an die Fleischverarbeitungseinheit, Erfassen von Eingangsproduktdaten, insbesondere Geometrie- und/oder Gewichtsdaten, der der Fleischverarbeitungseinheit zugeführten Eingangsfleischprodukte mittels der Eingangssensoreinheit, und Ermitteln einer Toleranzgröße für eine ausbeuterelevante Verarbeitungsgröße mittels eines mathematischen Modells oder einer Datenbank, jeweils in Abhängigkeit der erfassten Eingangsproduktdaten. Unter einer ausbeuterelevanten Verarbeitungsgröße kann eine die Verarbeitung repräsentierende Größe verstanden werden. Dies betrifft insbesondere den durch die Verarbeitung erzielten Ertrag und/oder Knochenanteil am Ausgangsfleischprodukt und/oder die durch die Verarbeitung erzielbare Schnitt- und/oder Verarbeitungsgenauigkeit. Unter der ausbeuterelevanten Verarbeitungsgröße kann alternativ oder ergänzend eine das Ausgangsfleischprodukt repräsentierende Größe verstanden werden. Dies betrifft insbesondere das durch Verarbeitung erzielbare Gewicht des jeweiligen Ausgangsfleischproduktes und/oder eine durch die Verarbeitung erzielbare geometrische Größe, wie beispielsweise die Länge, die Breite und/oder die Höhe des Ausgangsfleischproduktes.

Eingangs wurde erläutert, dass die Eingangsproduktdaten eines Eingangsfleischproduktes und/oder die Ausgangsproduktdaten, insbesondere die Geometrie- und/oder Gewichtsdaten, eines Ausgangsfleischproduktes als solche kaum dazu geeignet sind, um die Verarbeitungsqualität fehlerfrei beurteilen zu können. Dank der Berücksichtigung eines mathematischen Modells und/oder einer Datenbank, die in Verbindung mit den erfassten Eingangsproduktdaten dazu verwendet werden, um eine Toleranzgröße für eine ausbeuterelevante Verarbeitungsgröße zu ermitteln, ist eine Überwachung der Fleischverarbeitungsmaschine beziehungsweise der Fleischverarbeitungseinheit möglich, die die eingangs erläuterten Nachteile überwindet. Die Anwendung der erfassten Eingangsproduktdaten auf das mathematische Modell und/oder die Datenbank erlaubt es, vertrauenswürdige Toleranzgrößen zu ermitteln. Dies ist darauf zurückzuführen, dass die Anatomie des Fisches und/oder der strukturelle Aufbau der Maschine in dem mathematischen Modell und/oder der Datenbank berücksichtigt werden können. Unter dem mathematischen Modell wird vorzugsweise mindestens eine Formel mit mindestens einem zugehörigen Parameter verstanden. Besonders bevorzugt wird das mathematische Modell durch mindestens eine lineare und/oder nichtlineare Funktion, jeweils mit mindestens einem zugehörigen Parameter, repräsentiert. Bei dem mathematischen Modell kann es sich um ein analytisches oder empirisches Modell handeln. Es ist deshalb auch möglich, dass das mathematische Modell durch ein neuronales Netzwerk repräsentiert wird. Unter dem neuronalen Netzwerk wird ein Netz von künstlichen Neuronen verstanden. Die Neuronen können dazu in hintereinander liegenden Schichten (engl. Layer) angeordnet sein, die jeweils bevorzugt eine trainierbare Neuronenschicht des neuronalen Netzwerkes bilden. Die erfassten Eingangsproduktdaten dienen somit zur Anpassung des mathematischen Modells, insbesondere der zugehörigen Parameter, und der entsprechenden Ermittlung der Toleranzgröße und/oder zum Auswählen und/oder Zuordnen der richtigen Toleranzgröße aus der Datenbank. Es ist also die Kombination dieser zuletzt genannten Informationen, die den Vorteil der Toleranzgröße darstellt. Die Toleranzgröße kann somit zur Bewertung der ausbeuterelevanten Verarbeitungsgröße und deshalb auch zur Überwachung der Verarbeitung beziehungsweise der Fleischverarbeitungsmaschine und/oder der Fleischverarbeitungseinheit dienen.

Eine vorteilhafte Ausgestaltung des Verfahrens zeichnet sich dadurch aus, dass die Verarbeitungsgröße der Ertrag der Verarbeitung ist. In der Praxis hat sich gezeigt, dass der Ertrag der Verarbeitung besonders relevant ist. Der Ertrag ist vorzugsweise das Gewicht des Ausgangsfleischprodukts. Der Ertrag kann jedoch auch eine geometrische Größe des Ausgangsfleischprodukts, insbesondere die Länge, die Breite und/oder die Höhe des Ausgangsfleischproduktes sein.

Eine weitere vorteilhafte Ausgestaltung des Verfahrens zeichnet sich dadurch aus, dass als die Toleranzgröße für die Verarbeitungsgröße ein Toleranzbereich, ein oberer Toleranzwert und/oder ein unterer Toleranzwert ermittelt wird. Zwar ist es zumeist bevorzugt, dass die Toleranzgröße ein Toleranzbereich ist, jedoch gibt es auch Fälle, in denen eine einseitige Bereichsbegrenzung ausreicht. Ist es beispielsweise für die Überwachung besonders relevant, dass das Ausgangsfleischprodukt eine bestimmte Länge aufweist, ist ein unterer Toleranzwert hierfür ausreichend und vorteilhaft. Ist es wesentlich, dass das Ausgangsfleischprodukt für die spätere Vermarktung in eine Verpackungsschale mit einer maximalen Länge passt, und/oder für andere vergleichbare Anwendungszwecke angepasst ist, kann es von Vorteil sein, dass die Toleranzgröße ein oberer Toleranzwert ist. Zumeist ist es jedoch von Vorteil, wenn die Toleranzgröße einen Toleranzbereich mit einem oberen Toleranzwert und einem unteren Toleranzwert ist. Hierbei können die vorgenannten Vorteile vereint werden.

Eine weitere bevorzugte Ausgestaltung des Verfahrens zeichnet sich dadurch aus, dass die Verfahrensschritte für jedes der Fleischverarbeitungseinheit zugeführten Eingangsfleischprodukte, stichprobenhaft oder zyklisch mit einer vorgegebenen Periodizität ausgeführt werden. Wird das Verfahren beziehungsweise die Verfahrensschritte für jedes der Fleischverarbeitungseinheit zugeführte Eingangsfleischprodukt durchgeführt, kann auch von einer fleischproduktindividuellen Überwachung gesprochen werden. Die Überwachung kann in diesem Fall sehr genau erfolgen. Wenn ein Fehler und/oder andere Abweichungen und/oder eine nicht erwartete Störung auftreten, kann deren Auslösungszustand auf das jeweilige Fleischprodukt und/oder die Einstellungen beziehungsweise Maschinenparameter der Maschine zurückgeführt werden. Eine Optimierung der Fleischverarbeitungsmaschine und/oder der Fleischverarbeitungseinheit sind somit besonders einfach und effizient möglich. Es ist aber auch möglich, dass das Verfahren und/oder die Verfahrensschritte stichprobenhaft oder zyklisch mit einer vorgegebenen Periodizität ausgeführt werden. Hierbei sinkt der zugehörige Aufwand zur Ermittlung der Toleranzgröße. Sofern das Verfahren rechnerunterstützt ausgeführt wird, bedarf es somit auch einem geringeren Rechenaufwand.

Eine weitere vorteilhafte Ausgestaltung des Verfahrens zeichnet sich dadurch aus, dass der Toleranzgröße in Abhängigkeit der Eingangsproduktdaten oder der Eingangsproduktdaten und Maschinenparametern mindestens ein Wert aus der Datenbank zugeordnet wird, wobei von der Datenbank Toleranzgrößen in Abhängigkeit von Eingangsproduktdaten oder von Eingangsproduktdaten und Maschinenparametern gespeichert sind. Die von der Datenbank gespeicherten Größen und/oder Daten sind dazu bevorzugt vorgebbar und/oder vorgegeben. Hierbei kann es sich um eine Standarddatenbank handeln, die für die Verarbeitung der jeweiligen Kategorie, Formen und/oder Gewichtsbereichen von Eingangsfleischprodukten angepasst ist. Der zu ermittelnden Toleranzgröße wird dann in Abhängigkeit der tatsächlich erfassten Eingangsproduktdaten und/oder der tatsächlich erfassten Eingangsproduktdaten und der tatsächlich vorhandenen Maschinenparameter mindestens ein Wert aus der Datenbank zugeordnet. Dabei wird der Wert für die Toleranzgröße gewählt, der zu den tatsächlich erfassten Eingangsproduktdaten und/oder Maschinenparametern aus der Datenbank korrespondiert. Mit anderen Worten findet hier ein Abgleich anhand der Eingangsproduktdaten und/oder Maschinenparametern statt sowie eine Zuordnung der korrespondierenden Toleranzgröße. Bekannte Informationen über Fleischprodukte und/oder Einstellungen der Maschine können in einer Vielzahl von Kombinationen von Eingangsproduktdaten und/oder Maschinenparametern in der Datenbank verankert sein. Diese bekannten Informationen können dazu genutzt werden, um eine korrespondierende Toleranzgröße auszuwählen. Dies kann aufgrund der vielfach ausreichenden Rechenleistung besonders schnell erfolgen. Sofern die Quantisierungsschritte ausreichend klein gewählt sind, kann die Toleranzgröße auch entsprechend genau gewählt werden. Sofern bestimmte Kombinationen von Eingangsdaten und/oder Maschinenparametern nicht von der Datenbank abgedeckt werden, können diese durch Interpolation oder Extrapolation ermittelt werden.

Eine weitere vorteilhafte Ausgestaltung des Verfahrens zeichnet sich dadurch aus, dass die Toleranzgröße aus den Eingangsproduktdaten mittels eines Morphologiemodells als das mathematische Modell berechnet wird. Alternativ oder ergänzend kann das Verfahren in der Weise ausgestaltet sein, dass die Toleranzgröße aus den Eingangsproduktdaten und Maschinenparametern mittels des Morphologiemodells und eines Maschinenmodells, zusammen als das mathematische Modell, berechnet wird. Unter dem Morphologiemodell wird vorzugsweise ein mathematisches Modell, das beispielsweise durch mathematische Formeln und Parameter repräsentiert wird, zumindest eines Teils des Typs des Eingangsfleischpoduktes, verstanden. Besonders bevorzugt wird das Morphologiemodell durch mindestens eine lineare und/oder nichtlineare Funktion, jeweils mit mindestens einem zugehörigen Parameter, repräsentiert. Bei dem Morphologiemodell kann es sich um ein analytisches oder empirisches Modell handeln. Es ist deshalb auch möglich, dass das Morphologiemodell durch ein neuronales Netzwerk repräsentiert wird. Die erfassten Eingangsproduktdaten dienen somit zur Anpassung des Morphologiemodells, insbesondere der zugehörigen Parameter. Soll beispielsweise Lachs mittels der Fleischverarbeitungsmaschine verarbeitet werden, so wird als Morphologiemodell eines mathematisches Modell zumindest eines Teils des Lachses, vorzugsweise von dem gekröpften Lachskörper, verwendet. Das Morphologiemodell kann beliebig detailliert ausgestaltet sein. So kann es beispielsweise die gesamte Gestalt zumindest eines Teils des zu verarbeitenden Lachses (hier das Eingangsfleischprodukt) abbilden. Es ist aber auch möglich, dass das Morphologiemodell ein mathematisches Modell des Grätengerüstes und des Filetfleisches, insbesondere dessen Volumen, Geometrie und/oder Position auf beziehungsweise an dem Grätengerüst, umfasst. Unter dem Maschinenmodell wird vorzugsweise ein mathematisches Modell, das beispielsweise durch mathematische Formeln und Parameter repräsentiert wird, zumindest eines Teils der Maschine verstanden. Das Maschinenmodell kann also ein Modell zumindest eines Teils der Maschine sein. Besonders bevorzugt wird das Maschinenmodell durch mindestens eine lineare und/oder nichtlineare Funktion, jeweils mit mindestens einem zugehörigen Parameter, repräsentiert. Bei dem Maschinenmodell kann es sich um ein analytisches oder empirisches Modell handeln. Es ist deshalb auch möglich, dass das Maschinenmodell durch ein neuronales Netzwerk repräsentiert wird. Die Maschinenparameter dienen somit zur Anpassung des Maschinenmodells, insbesondere der zugehörigen Parameter. Das Morphologiemodell und/oder das Maschinenmodell können gemeinsam als das mathematische Modell dienen. Hierzu können das Morphologiemodell und/oder das Maschinenmodell mathematisch, insbesondere funktional, miteinander verbunden sein. Auch hierbei kann die Toleranzgröße aufgrund der vielfach ausreichenden Rechenleistung besonders schnell ermittelt werden. Eine vorteilhafte Ausgestaltung zeichnet sich dadurch aus, dass die Toleranzgröße bereits vor der Verarbeitung des Eingangsfleischproduktes durch die Fleischverarbeitungseinheit berechnet beziehungsweise ermittelt wird. Das mathematische Modell zeichnet sich ferner durch den geringen Speicherbedarf aus. Für das mathematische Modell wird außerdem bevorzugt der sogenannte Korpulenzfaktor berücksichtigt. Dieser ist im Bereich der Verarbeitung von Fleischkörpern bekannt.

Eine weitere vorteilhafte Ausgestaltung des Verfahrens zeichnet sich durch die folgenden Schritte aus: Nachverfolgung von Eingangsfleischpodukten, Erfassen von Ausgangsproduktdaten, insbesondere Geometrie- und/oder Gewichtsdaten, des jeweils von der Fleischverarbeitungseinheit weggeführten, korrespondierenden, insbesondere ausbeuterelevanten Ausgangsfleischproduktes mittels einer Ausgangssensoreinheit der Fleischverarbeitungsmaschine, wobei die Steuerungseinheit mit der Ausgangssensoreinheit verbunden ist, und Ermitteln der ausbeuterelevanten Verarbeitungsgröße in Abhängigkeit der Eingangsproduktdaten und den dazu korrespondierenden Ausgangsproduktdaten, insbesondere durch Differenzbildung oder Verhältnisbildung. Die Nachverfolgung von Fleischprodukten, insbesondere der Eingangsfleischprodukte und/oder der Ausgangsfleischprodukte, ermöglicht es, die erfassten Informationen hierzu, insbesondere die Eingangsproduktdaten beziehungsweise Ausgangsproduktdaten miteinander in Beziehung zu setzen beziehungsweise miteinander zu verknüpfen. Somit kann eine die Verarbeitung charakterisierende ausbeuterelevante Verarbeitungsgröße ermittelt werden. Zwar können auch die Ausgangsproduktdaten die ausbeuterelevante Verarbeitungsgröße darstelle. In der Praxis hat sich jedoch als vorteilhaft erwiesen, wenn die ausbeuterelevante Verarbeitungsgröße in Abhängigkeit der Eingangsproduktdaten und den dazu korrespondierenden Ausgangsproduktdaten ermittelt wird. Dies ist auch dank der Nachverfolgung möglich. Die Ermittlung erfolgt dabei durch Differenzbildung und/oder Verhältnisbildung, insbesondere der einander zugehörigen Werte dieser Daten. Des Weiteren ist es bevorzugt, dass die ausbeuterelevante Verarbeitungsgröße mit der zugehörigen beziehungsweise korrespondierenden Toleranzgröße verglichen wird. Damit ist es möglich, eine objektive Aussage über die Verarbeitung, insbesondere der Verarbeitungsqualität und/oder dessen Status, abzugeben. Dies kann beispielsweise einen Fehler und/oder eine nicht tolerierte Abweichung betreffen.

Eine weitere vorteilhafte Ausgestaltung des Verfahrens zeichnet sich durch eine Ausgabe eines Warnsignals mittels einer akustischen und/oder optischen Ausgabeeinheit, wenn die ermittelte Verarbeitungsgröße außerhalb des Toleranzbereiches ist, und/oder eines Statussignals mittels der akustischen und/oder optischen Ausgabeeinheit aus, wenn die ermittelte Verarbeitungsgröße innerhalb des Toleranzbereiches ist. Überschreitet also beispielsweise die tatsächliche Verarbeitungsgröße einen zugehörigen Toleranzbereich, wird ein Warnsignal ausgegeben. Dieses Warnsignal kann auf einen Fehler und/oder eine Störung der Fleischverarbeitungsmaschine beziehungsweise der Fleischverarbeitungseinheit hinweisen. Arbeitet die Fleischverarbeitungsmaschine beziehungsweise die Fleischverarbeitungseinheit korrekt, so ist die tatsächliche Verarbeitungsgröße innerhalb des zugehörigen Toleranzbereichs. In der Praxis hat sich gezeigt, dass das Bedienpersonal auch an dieser Information Interesse hat. Es ist deshalb bevorzugt vorgesehen, ein entsprechendes Statussignal auszugeben.

Eine weitere vorteilhafte Ausgestaltung des Verfahrens zeichnet sich dadurch aus, dass der Wert des Statussignals in Abhängigkeit von einer Abweichung zwischen der ermittelten Verarbeitungsgröße und einer der Bereichsgrenzen des Toleranzbereichs eingestellt wird. Dank einer derartigen Ausgabe des Statussignals wird das Bedienpersonal kontinuierlich auf das Optimierungspotential und/oder auf die Optimierung als solches der Fleischverarbeitungsmaschine hingewiesen.

Eine weitere vorteilhafte Ausgestaltung des Verfahrens zeichnet sich durch die folgenden Schritte aus: Vorgabe einer Toleranzgröße für die zu den erfassten Eingangsproduktdaten korrespondierende Verarbeitungsgröße oder Ermittlung der Toleranzgröße mittels der zu den erfassten Eingangsproduktdaten korrespondierenden Verarbeitungsgröße, Bestimmen eines Datenbankparametersatzes umfassend die Eingangsproduktdaten, die Toleranzgröße für die zugehörige Verarbeitungsgröße und/oder die Maschinenparameter, und Aktualisieren der Datenbank mit dem Datenbankparametersatz. Wird ein Eingangsfleischprodukt durch die Fleischverarbeitungseinheit zu einem Ausgangsfleischprodukt verarbeitet und dabei erkannt, dass diese Verarbeitung besonders gut und korrekt erfolgt, können die dazu erfassten Daten, Größen oder Parameter verwendet werden, um die Datenbank zu aktualisieren und/oder zu verfeinern beziehungsweise zu verbessern. Aufgrund der besonders guten oder aus sonstigen Gründen zu berücksichtigenden Verarbeitung kann die zugehörige Verarbeitungsgröße als Anhaltswert für die Toleranzgröße verwendet werden. Somit kann besonders einfach eine zugehörige Toleranzgröße vorgegeben werden. Alternativ kann diese Verarbeitungsgröße auch zur Berechnung der Toleranzgröße dienen. Dabei kann ein Toleranzbereich, ein oberer Toleranzbereich und/oder ein unterer Toleranzbereich (jeweils für die Datenbank) durch Addition beziehungsweise Subtraktion eines vorgebbaren Wertes ermittelt werden. Ein Datenbankparametersatz setzt sich dann aus den erfassten Eingangsproduktdaten, der ermittelten und/oder vorgegebenen Toleranzgröße und/oder den entsprechenden Maschinenparametern zusammen. Dieser Datenbankparametersatz wird daraufhin zur Aktualisierung der Datenbank verwendet. Es ist somit möglich, auch während der Verarbeitung und/oder danach die Datenbank weiter zu ergänzen, um somit die Qualität der Überwachung zu verbessern.

Eine weitere vorteilhafte Ausgestaltung zeichnet sich dadurch aus, dass die Aktualisierung der Datenbank erfolgt, wenn die Verarbeitungsgröße innerhalb des Toleranzbereiches ist. In diesem Fall kann angenommen werden, dass der Toleranzbereich noch verkleinert werden kann, um somit die Genauigkeit der Überwachung zu erhöhen. Es kann aber auch vorgesehen sein, dass die Aktualisierung der Datenbank erfolgt, wenn die Verarbeitungsgröße außerhalb des Toleranzbereiches ist. Dies kann insbesondere dann erfolgen, wenn die Verarbeitungsgröße mehrfach hintereinander außerhalb des Toleranzbereichs ist. In diesem Fall kann angenommen werden, dass der Toleranzbereich zu eng dimensioniert ist und es somit gegebenenfalls zu einer fehlerhaften Bewertung der Verarbeitung kommt. Dann wäre der Toleranzbereich zu vergrößern. Entsprechendes kann auch für die einseitigen Bereichsgrenzen der Toleranzgröße gelten. Es ist somit möglich, dass die Aktualisierung der Datenbank erfolgt, wenn die Verarbeitungsgröße kleiner oder größer als der obere Toleranzwert ist oder wenn die Verarbeitungsgröße kleiner oder größer als der untere Toleranzwert ist.

Eine weitere vorteilhafte Ausgestaltung des Verfahrens zeichnet sich durch einen Einrichtbetrieb der Fleischverarbeitungsmaschine umfassend die folgenden Schritte aus: Neufestsetzung der Datenbankparameter mit einem vorgegebenen Musterparameterdatensatz, und Zuführen von Referenzfleischprodukten als Eingangsfleischprodukte zu der Fleischverarbeitungseinheit. Wird die Fleischverarbeitungsmaschine insbesondere für bisher unbekannte Fleischprodukte eingerichtet, besteht noch keine Datenbank, auf die zurückgegriffen werden kann. Es ist deshalb vorgesehen, zuvor ausgewählte Fleischprodukte, die hier beispielsweise als Referenzfleischprodukte bezeichnet werden, der Fleischverarbeitungseinheit als Eingangsfleischprodukte zuzuführen. Diese Referenzfleischprodukte können zuvor vermessen und die Fleischverarbeitungseinheit auf diese Fleischprodukte besonders gut eingestellt sein, so dass davon ausgegangen wird, dass die Fleischverarbeitungseinheit diese Referenzfleischprodukte besonders gut verarbeitet. Mittels der durch diese Verarbeitung gewonnenen Daten und/oder Größen kann eine entsprechende Datenbank aufgebaut und/oder erweitert werden, um diese für den weiteren Betrieb der Fleischverarbeitungsmaschine und/oder der Fleischverarbeitungseinheit zu verwenden.

Eine weitere vorteilhafte Ausgestaltung des Verfahrens zeichnet sich durch ein Registrieren jeweils des zugeführten Eingangsfleischproduktes, dessen Eingangsproduktdaten außerhalb eines vorgegebenen Produktdatentoleranzbereichs für zuzuführende Eingangsfleischprodukte sind, aus. Alternativ oder ergänzend zeichnet sich das Verfahren vorzugsweise auch durch ein Registrieren jeweils des weggeführten Ausgangsfleischproduktes, dessen Ausgangsproduktdaten außerhalb eines vorgegebenen Produktdatentoleranzbereichs für wegzuführende Ausgangsfleischprodukte sind, aus. Die Registrierung bestimmter Eingangs- und/oder Ausgangsfleischprodukte dient dazu, Über- und/oder Untergrößen bezogen auf bestimmte Eigenschaften der jeweiligen Eingangsbeziehungsweise Ausgangsfleischprodukte zu kennzeichnen und es zu ermöglichen, diese Information für das weitere Verfahren zu verwenden. Wird beispielsweise ein übergroßes Eingangsfleischprodukt der Fleischverarbeitungseinheit zugeführt, von dem bekannt ist, dass die Fleischverarbeitungseinheit nicht dazu geeignet ist, derartige übergroße Fleischprodukte zu verarbeiten, so kann vorausgesagt werden, dass es nicht zu einer korrekten Verarbeitung kommt. Ähnliches gilt für derartig gekennzeichnete Ausgangsfleischprodukte.

Eine weitere vorteilhafte Ausgestaltung des Verfahrens zeichnet sich dadurch aus, dass das Warn- und/oder Statussignal für ein registriertes Eingangs- und/oder Ausgangsfleischprodukt mit einer vorgegebenen Kennzeichnung ausgegeben wird. Die zuvor genannte Registrierung kann also dazu verwendet werden, dass Bedienpersonal durch ein Warn- und/oder Statussignal auf derartige Eingangs- und/oder Ausgangsfleischprodukte hinzuweisen. Auch wenn die Fleischverarbeitungsmaschine und/oder die Fleischverarbeitungseinheit das Eingangsfleischprodukt nicht korrekt zu dem Ausgangsfleischprodukt verarbeitet hat, das theoretisch möglich wäre, so ist es dank der Registrierung möglich, das Bedienpersonal darauf hinzuweisen, dass eine derartige Verarbeitung keinen Fehler der Maschine darstellt. Vielmehr liegt es daran, dass der Fleischverarbeitungsmaschine ein Eingangsfleischprodukt zugeführt wurde, das zur Verarbeitung mit einer derartigen Maschine nicht geeignet ist. Das Bedienpersonal braucht in diesem Falle keinen Stopp und/oder andere Einstellungsmaßnahmen vorzunehmen. Vielmehr kann es den laufenden Betrieb ungehindert fortsetzen. Eine derartig betriebene Fleischverarbeitungsmaschine weist somit besonders geringe Unterbrechungszeiten und im betriebswirtschaftlichen Sinne gegebenenfalls eine besonders hohe Effizienz auf.

Eine weitere vorteilhafte Ausgestaltung des Verfahrens zeichnet sich dadurch aus, dass ein zu dem registrierten Eingangsfleischprodukt zugehöriger Datenbankparametersatz bei der Aktualisierung der Datenbank unberücksichtigt bleibt. Bereits zuvor wurde erläutert, dass ein registriertes Eingangsfleischprodukt nicht dazu geeignet ist, korrekt von der Fleischverarbeitungseinheit verarbeitet zu werden. Es ist somit auch nicht sinnvoll, ein derartiges Eingangsfleischprodukt bei der Aktualisierung der Datenbank zu berücksichtigen, da dies anderenfalls zu einer Verschlechterung des Informationsgehalts und/oder Aussagequalität der Toleranzgröße führen könnte.

Die eingangs genannte Aufgabe wird außerdem durch eine Fleischverarbeitungsmaschine zur Fleischverarbeitung mit einer Fleischverarbeitungseinheit zur Verarbeitung von dieser zugeführten Eingangsfleischprodukten zu Ausgangsfleischprodukten, einer Eingangssensoreinheit, und einer Steuerungseinheit zur Steuerung der Fleischverarbeitungseinheit gelöst, wobei die Steuerungseinheit mit der Eingangssensoreinheit verbunden ist, und wobei die Fleischverarbeitungsmaschine zum Ausführen des Verfahrens nach einem der vorerläuterten bevorzugten Ausgestaltungen eingerichtet und/oder ausgebildet ist. Die sich daraus ergebenden Vorteile wurden bereits im Zusammenhang mit dem Verfahren erläutert, weshalb zur Vermeidung von Wiederholungen auf die entsprechenden Passagen verwiesen wird

Weitere vorteilhafte Merkmale der Erfindung werden aus der Beschreibung der erfindungsgemäßen Ausführungsformen zusammen mit den Ansprüchen und/oder den beigefügten Zeichnungen ersichtlich. Dabei können erfindungsgemäße Ausführungsformen einzelne oder eine Kombination mehrerer Merkmale erfüllen beziehungsweise wiedergeben. Die Erfindung wird nachstehend ohne Beschränkung des allgemeinen Erfindungsgedankens anhand eines Ausführungsbeispiels unter Bezugnahme auf die Zeichnungen beschrieben. In den Zeichnungen zeigen:

Fig. 1    eine schematische Draufsicht auf eine Vorrichtung zur Überwachung einer Fleischverarbeitungsmaschine und

Fig. 2    eine grafische Darstellung von zu erwartenden Erträgen und korrespondierenden Toleranzgrößen in Abhängigkeit der jeweiligen Länge der der Fleischverarbeitungseinheit zugeführten Eingangsfleischprodukten.

Die im Folgenden beschriebenen Merkmale stellen mögliche Weiterbildungen dar, wobei die Merkmale einzeln oder in Kombination miteinander und/oder mit den zuvor genannten Merkmalen ausgestaltet sein können. Außerdem sind in den folgenden Figuren jeweils gleiche oder gleichartige beziehungsweise entsprechende Teile mit denselben Bezugsziffern versehen, so dass von einer jeweils erneuten Vorstellung abgesehen wird.

Allgemein wird darauf hingewiesen, dass abhängig von den Gegebenheiten, das erfindungsgemäße Verfahren auch in Software implementiert sein kann. Die Implementation kann auf einem digitalen Speichermedium mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf dem Computer abläuft.

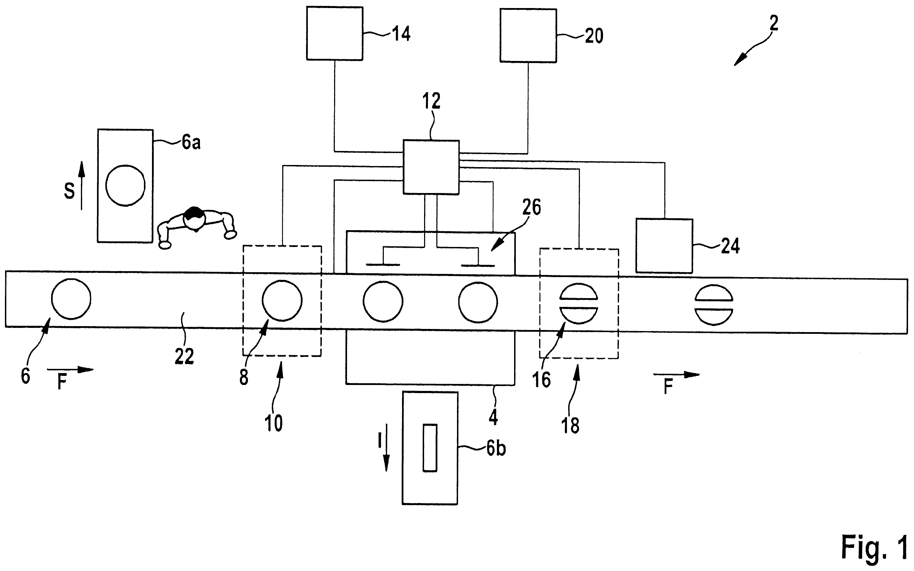

Bezugnehmend auf die schematische Darstellung aus Fig. 1 betrifft die Erfindung ein Verfahren zur Überwachung einer Fleischverarbeitungsmaschine 2 mit einer Fleischverarbeitungseinheit 4 zur Verarbeitung von dieser zugeführten Eingangsfleischprodukten 8, einer Eingangssensoreinheit 10 und einer Steuerungseinheit 12 zur Steuerung der Fleischverarbeitungseinheit 4, wobei die Steuerungseinheit 12 mit der Eingangssensoreinheit 10 verbunden ist, umfassend die Schritte: Zuführen von Eingangsfleischprodukten 8 an die Fleischverarbeitungseinheit 4, Erfassen von Eingangsproduktdaten L, insbesondere Geometrie- und/oder Gewichtsdaten, der der Fleischverarbeitungseinheit 4 zugeführten Eingangsfleischprodukte 8 mittels der Eingangssensoreinheit 10, und Ermitteln einer Toleranzgröße T für eine ausbeuterelevante Verarbeitungsgröße V mittels eines mathematischen Modells und/oder einer Datenbank 14, jeweils in Abhängigkeit der erfassten Eingangsproduktdaten L.

Mittels des erfindungsgemäßen Verfahrens wird also eine Fleischverarbeitungsmaschine 2 überwacht. Die Fleischverarbeitungsmaschine 2 umfasst dazu die Fleischverarbeitungseinheit 4. Der Fleischverarbeitungseinheit 4 werden Eingangsfleischprodukte 8 zugeführt, um anschließend von der Fleischverarbeitungseinheit 4 verarbeitet zu werden. Die Verarbeitung als solche mittels einer Fleischverarbeitungseinheit 4 ist aus dem Stand der Technik bekannt. So kann beispielsweise durch Einsatz mindestens eines Messers der Fleischverarbeitungseinheit 4 das Eingangsfleischprodukt 8 geschnitten, insbesondere filetiert werden.

Um der Fleischverarbeitungseinheit 4 Fleischprodukte 6 zuzuführen, ist ein Förderelement 22, insbesondere ein Förderband 22, vorgesehen. Das Förderelement 22 fördert Fleischprodukte 6 in Förderrichtung F. Bevor ein Fleischprodukt 6 die Eingangssensoreinheit 10 erreicht, hat es sich als vorteilhaft erwiesen, eine Qualitätskontrolle und/oder eine optische Kontrolle der geförderten Fleischprodukte 6 durchzuführen. Dies kann auch unter Zuhilfenahme von einem menschlichen Eingriff erfolgen. Fleischprodukte 6, die einer vorgebbaren Voraussetzung nicht genügen, können ausgeschleust werden. Insbesondere können diese Fleischprodukte 6a seitlich in Richtung S vom Förderelement 22 entnommen und/oder ausgeschleust werden.

Erreicht ein Fleischprodukt 6 den Eingangssensor 10 und/oder einen Eingangsbereich der Fleischverarbeitungseinheit 4, ist es vorgesehen, dieses Fleischprodukt 6 als Eingangsfleischprodukt 8 zu bezeichnen. Die Zuführung des Eingangsfleischprodukts 8 an die Fleischverarbeitungseinheit 4 erfolgt somit auch mittels des Förderelements 22. Das Förderelement 22 kann dazu mit der Steuerungseinheit 12 verbunden sein.

Grundsätzlich dient die Steuerungseinheit 12 zur Steuerung der Fleischverarbeitungseinheit 4. Sofern die Steuerungseinheit 12 auch mit dem Förderelement 22 verbunden ist, kann die Steuerungseinheit 12 auch zur Steuerung des Förderelements 22 oder der Fleischverarbeitungsmaschine 2 dienen. Dazu kann dem Förderelement 22 eine Positions- und/oder Geschwindigkeitssensoreinheit zugeordnet sein, um die jeweilige Position eines Fleischproduktes 6 beziehungsweise eines Eingangsfleischproduktes 8 an die Steuerungseinheit 12 zu übermitteln. Die Steuerungseinheit 12 ist außerdem mit der Eingangssensoreinheit 10 verbunden. Die Eingangssensoreinheit 10 dient zum Erfassen von Eingangsproduktdaten L der der Fleischverarbeitungseinheit 4 zugeführten Eingangsfleischprodukte 8. Dabei werden von der Eingangssensoreinheit 10 insbesondere die Geometrie- und/oder Gewichtsdaten als Eingangsproduktdaten L erfasst. So kann beispielsweise mittels der Eingangssensoreinheit 10 die Länge, die Breite, die Höhe und/oder das Gewicht des jeweiligen Eingangsfleischproduktes 8 erfasst werden. Aufgrund der Verbindung zwischen der Eingangssensoreinheit 10 und der Steuerungseinheit 12, stehen die erfassten Eingangsproduktdaten L auch der Steuerungseinheit 12 zur Verfügung.

Bei der Eingangssensoreinheit 10 kann es sich um eine kontaktlose oder um eine kontaktbehaftete Sensoreinheit handeln. Handelt es sich beispielsweise um eine kontaktlose Eingangssensoreinheit 10, so kommt diese mit dem Eingangsfleischprodukt 8 nicht in Kontakt. Die Eingangssensoreinheit 10 kann dazu mindestens ein optisches Sensormittel, insbesondere mindestens eine Lichtschranke und/oder mindestens eine Kamera, mindestens eine Röntgeneinheit und/oder mindestens eine Ultraschalleinheit aufweisen. Ferner kann die Eingangssensoreinheit 10 eine Datenvorverarbeitung aufweisen, die die erfassten Signale verarbeitet und in die physikalischen Größen repräsentierenden Werte und/oder Signale umwandelt.

Nach dem Erfassen der Eingangsproduktdaten L der zugeführten Eingangsfleischprodukte 8 werden diese von der Fleischverarbeitungseinheit 4 verarbeitet. Wird beispielsweise Lachs mittels des Förderelements 22 der Fleischverarbeitungseinheit 4 zugeführt, kann die Verarbeitung in dem sogenannten Trimmen der Filetseitenkanten bestehen. Der sogenannte Trim 6b, also der von dem Lachsfilet abgetrennte Teil kann dazu seitlich in Richtung I ausgeschleust werden. Das von der Fleischverarbeitungseinheit 4 zu dem Ausgangsfleischprodukt 16 verarbeitete (in diesem Fall also das von dem Trim 6b befreite) Fleischprodukt wird von der Fleischverarbeitungseinheit 4 weggeführt. Dies kann ebenfalls mittels des Förderelements 22 in Förderrichtung F erfolgen. Die Erfindung ist jedoch nicht auf eine derartige Verarbeitung eingeschränkt. So kann es sich bei der Verarbeitung mittels der Fleischverarbeitungseinheit 4 alternativ und/oder ergänzend um ein Abtrennen von Gräten, Knochen, und/oder anderen Teilen des Eingangsfleischproduktes 8 handeln. Auch kann es vorgesehen sein, dass auf das Eingangsfleischprodukt 8 in einer anderen Art mechanisch und/oder energetisch eingewirkt wird.

Außerdem ist die Ermittlung einer Toleranzgröße T für eine ausbeuterelevante Verarbeitungsgröße V mittels eines mathematischen Modells und/oder einer Datenbank vorgesehen, wobei die Ermittlung jeweils in Abhängigkeit der erfassten Eingangsproduktdaten L erfolgt. Dank der Toleranzgröße T ist es möglich, nicht nur über die Effizienz der Fleischverarbeitungsmaschine eine Aussage zu treffen, sondern auch darüber, ob die Fleischverarbeitungseinheit 4 das Eingangsfleischprodukt 8 hätte besser verarbeiten können und/oder ob die Fleischverarbeitungseinheit 4 fehlerhaft eingestellt ist und/oder ob die Fleischverarbeitungseinheit 4 grundsätzlich fehlerhaft arbeitet.

Unter einer ausbeuterelevanten Verarbeitungsgröße V kann dazu eine die Verarbeitung repräsentierende Größe verstanden werden. Dies betrifft insbesondere den durch die Verarbeitung erzielbaren Ertrag und/oder den Knochenanteil am Ausgangsfleischprodukt 16 und/oder die durch die Verarbeitung erzielbare Schnitt- und/oder Verarbeitungsgenauigkeit.

Unter einer ausbeuterelevanten Verarbeitungsgröße kann alternativ oder ergänzend eine das Ausgangsfleischprodukt 16 repräsentierende Größe verstanden werden. Dies betrifft insbesondere das durch die Verarbeitung erzielbare Gewicht des jeweiligen Ausgangsfleischprodukts 16 und/oder eine durch die Verarbeitung erzielbare geometrische Größe, vorzugsweise die Länge, die Breite und/oder die Höhe des Ausgangsfleischprodukts 16.

Die Verarbeitungsgröße V kann sich auch auf einen Teil des Fleischprodukts, also insbesondere des Eingangsfleischproduktes 8 und/oder Ausgangsfleischproduktes 16, und/oder auf eine jeweils zueinander korrespondierende Eigenschaft des Eingangsfleischproduktes 8 und des Ausgangsfleischproduktes 16 beziehen.

Außerdem ist vorgesehen, dass die ausbeuterelevante Verarbeitungsgröße V den Teil der Verarbeitungsgröße V betrifft, der für den Ertrag relevant ist. Mit anderen Worten kann unter der ausbeuterelevanten Verarbeitungsgröße V eine Größe verstanden werden, die die für den Ertrag relevante Verarbeitung der Fleischverarbeitungseinheit 4 und/oder den für den Ertrag relevanten Teil des Ausgangsfleischproduktes 16 charakterisiert.

Die Toleranzgröße ist eine Größe, insbesondere ein Wert und/oder eine Wertesatz, die einen "zulässigen" Wertebereich für die ausbeuterelevante Verarbeitungsgröße bestimmt.

Die erfindungsgemäßen Vorteile sollen im Folgenden anhand eines Beispiels erläutert werden: Durch die Fleischverarbeitungseinheit 4 kann beispielsweise Filetfleisch (hier also das gewünschte Ausbeutefleischprodukt 16) von den Knochen und/oder Gräten eines Eingangsfleischproduktes 8 (hier beispielsweise ein Fisch) getrennt werden.

Die Trennung erfolgt jedoch nur zu einem gewissen Grad. In der Praxis wurde festgestellt, dass noch Fleischreste an den Knochen oder Gräten verbleiben, so dass es zu einer nicht vollständigen Trennung kommen kann. Die Ausbeute beschreibt deshalb denjenigen Fleischproduktanteil, der von dem übrigen zu verarbeitenden Eingangsfleischprodukt 8 durch die Fleischverarbeitungseinheit 4 getrennt werden soll. Die absolute Ausbeute kann dann das Ausgangsfleischprodukt 16, hier also beispielsweise das abgetrennte Filetfleisch, sein. Die relative Ausbeute kann das Verhältnis von dem Ausgangsfleischprodukt 16 zu dem Eingangsfleischprodukt 8 sein. Unter dem Ausgangsfleischprodukt 16 ist dabei vorzugsweise der Teil des verarbeitenden Fleischproduktes 6 zu verstehen, der ausgebeutet und/oder gewonnen werden soll. Es ist also bevorzugt, dass der übrige Teil des jeweiligen Fleischproduktes 6 - auf das Beispiel bezogen also die Knochen, Gräten und/oder sonstiger Trim - nicht als Ausgangsfleischprodukt 16 angesehen wird. In der Praxis wurde außerdem festgestellt, dass relative Ausbeuten von insbesondere deutlich unter 80% nicht selten erzielt werden. Dies ist einerseits auf die vorangegangenen Erläuterungen zurückzuführen. Außerdem werden aufgrund der vielfältigen Kategorien, Formen, Längen, Größen und/oder Höhen eines Eingangsfleischprodukts 8 besonders hohe Anforderungen an die Fleischverarbeitungseinheit 4 gestellt. Nicht jede Fleischverarbeitungseinheit 4 ist jedoch gleichermaßen geeignet, um unterschiedliche Kategorien und/oder Formen von Eingangsfleischprodukten 8 in der Weise zu verarbeiten, dass eine gleich hohe, insbesondere relative, Ausbeute erreicht wird. Oftmals ist es nötig, die Maschinenparameter einer Fleischverarbeitungseinheit 4 auf das jeweils zu verarbeitende Eingangsfleischprodukt 8 einzustellen. Dabei unterliegen die Maschinenparameter konstruktionsbedingten Grenzen. So wurde in der Praxis festgestellt, dass Fleischverarbeitungseinheiten 4 beispielsweise in der Weise ausgestaltet sind, dass sie Fische mit einer Rumpfhöhe aus einem bestimmten Rumpfhöhenbereich besonders gut im Sinne der Ausbeute verarbeiten können. Werden nun von dieser Fleischverarbeitungseinheit 4 beispielsweise Fische mit der gleichen Rumpfhöhe verarbeitet, ist es dennoch möglich, dass jeweils eine unterschiedliche Ausbeute erzielt wird. Das ist beispielsweise darauf zurückzuführen, dass es schmale lange oder kurze breite oder mittellange und mittelbreite Fische mit der jeweils gleichen Rumpfhöhe gibt. Zwischen diesen Extremen sind eine Vielzahl von Formen denkbar und in der Praxis auch gegeben. Aufgrund der jeweils unterschiedlich ausgestalteten Form des zu verarbeitenden Fisches beziehungsweise Eingangsfleischproduktes ist es oftmals nicht oder nur schwer möglich, dass die Fleischverarbeitungseinheit 4 das zu verarbeitende Eingangsfleischprodukt 8 gleich gut in der Weise verarbeitet, dass jeweils die maximale Ausbeute erzielt wird. Dies gilt insbesondere für die Verarbeitung von Fisch. Hier konnte in der Praxis festgestellt werden, dass die Verarbeitungsmesser einer Fleischverarbeitungseinheit 4 (hier vorzugsweise eine Fischverarbeitungseinheit) nicht jeder Kontur des Fischgrätenskeletts eines zu verarbeitenden Fisches (als das Eingangsfleischprodukt 8) folgen können. An den Gräten verbleibt deshalb noch ein Rest von Fleisch. Dies führt zu einer absolut als auch relativ gesehen schlechteren und/oder nicht optimalen Ausbeute. Es ist jedoch kein Fehler der Fleischverarbeitungsmaschine 2 und/oder der Fleischverarbeitungseinheit 4, wenn beispielsweise Fische mit der gleichen Rumpfhöhe von der gleichen Fleischverarbeitungsmaschine 2 beziehungsweise Fleischverarbeitungseinheit 4 mit unterschiedlichen relativen und/oder absoluten Ausbeuten verarbeitet werden können. Eine Toleranzgröße, die einen "zulässigen" Wertebereich für die ausbeuterelevante Verarbeitungsgröße bestimmt, ist deshalb von Vorteil. Für das vorangegangene Beispiel wird dies eine Toleranzgröße für die (relative und/oder absolute) Ausbeute sein. In der Praxis wurde darüber hinaus festgestellt, dass die Fleischverarbeitungsmaschine 2 beziehungsweise Fleischverarbeitungseinheit 4 mit einer statischen beziehungsweise festen Toleranzgröße T nicht immer korrekt überwacht werden kann. So wurde festgestellt, dass eine statische Toleranzgröße T, die für Eingangsfleischprodukte 8 mit einem geringen Gewicht einerseits geeignet sein kann, um die Fleischverarbeitungsmaschine 2 beziehungsweise Fleischverarbeitungseinheit 4 zu überwachen, andererseits für Eingangsfleischprodukte 8 mit einem höheren oder deutlich höherem Gewicht ungeeignet sein kann, um die gleiche Fleischverarbeitungsmaschine 2 beziehungsweise Fleischverarbeitungseinheit 4 korrekt zu überwachen. Bei der Verarbeitung von Eingangsfleischprodukten 8 mit dem höheren Gewicht wurde der durch die statische Toleranzgröße T bestimmte "zulässige" Wertebereich für die ausbeuterelevante Verarbeitungsgröße V über- beziehungsweise unterschritten, so dass ein Fehler in der Fleischverarbeitungsmaschine 2 beziehungsweise der Fleischverarbeitungseinheit 4 festgestellt wurde. Bei genauerer Betrachtung wurde jedoch festgestellt, dass die ausbeuterelevante Verarbeitungsgröße V einen akzeptablen Wert aufwies, jedoch der durch die statische Toleranzgröße T bestimmt "zulässige" Wertbereich zu klein beziehungsweise zu eng festgelegt war. Es ist deshalb von Vorteil, wenn die Toleranzgröße T für die Ausbeute in Abhängigkeit des Gewichts des jeweiligen Eingangsfleischproduktes 8 ermittelt beziehungsweise bestimmt wird. Für unterschiedlich schwere Eingangsfleischprodukte 8 kann somit eine entsprechende Anzahl unterschiedlicher Toleranzgrößen T vorgesehen sein. Ferner wurde festgestellt, dass nicht nur das Gewicht, sondern auch andere physikalische Größen des Eingangsfleischproduktes 8 Einfluss auf die Verarbeitung und somit auf einen "zulässigen" Wertebereich haben. Es ist deshalb vorgesehen, die erfassten Eingangs-produktdaten L der jeweiligen Eingangsfleischprodukte 8 zu nutzen, um die jeweils zugehörige Toleranzgröße T zu bestimmen beziehungsweise zu ermitteln. Dies erfolgt mittels eines mathematischen Modells oder einer Datenbank 14. So werden beispielsweise die erfassten Eingangsproduktdaten L verwendet, um die jeweils korrespondierenden Parameter des mathematischen Modells einzustellen, so dass mit diesem mathematischen Modell die korrespondierende Toleranzgröße T für die ausbeuterelevante Verarbeitungsgröße V ermittelt werden kann. Eine ähnliche Ermittlung kann mittels der Datenbank 14 erfolgen. Die erfassten Eingangsproduktdaten L bestimmen, welcher Wert aus der Datenbank 14 für die Toleranzgröße T entnommen wird, der sodann die Toleranzgröße T für eine ausbeuterelevante Verarbeitungsgröße V darstellt. Das mathematische Modell und die Datenbank 14 können auch in Kombination miteinander verwendet werden.

Dank der Ermittlung der Toleranzgröße T in Abhängigkeit der erfassten Eingangsproduktdaten L können die zuvor genannten Fehler in der Überwachung der Fleischverarbeitungsmaschine 2 beziehungsweise der Fleischverarbeitungseinheit 4 effektiv verhindert werden. Denn die erfassten Eingangsproduktedaten L ermöglichen es, die Toleranzgröße T an das jeweilige Eingangsfleischprodukt 8 anzupassen. Wenn nun also eine Mehrzahl von Fischen mit der gleichen Rumpfhöhe durch die Fleischverarbeitungsmaschine 2 beziehungsweise Fleischverarbeitungseinheit 4 verarbeitet werden sollen, wobei die Fische unterschiedliche Längen, Breiten und/oder Gewichte aufweisen, wird die Toleranzgröße T sich vorteilhafterweise dynamisch an die Eingangsfleischprodukte 8 anpassen. Das bedeutet jedoch nicht zwangsläufig, dass der "zulässige" Wertebereich für die jeweilige ausbeuterelevante Verarbeitungsgröße V vergrößert wird. Vielmehr kann der "zulässige" Wertebereich verkleinert und/oder verschoben werden, und zwar auf den Bereich, in dem die ausbeuterelevante Verarbeitungsgröße V erwartet wird. Mit anderen Worten kann in Abhängigkeit der erfassten Eingangsproduktdaten L und mittels des mathematischen Modells und/oder der Datenbank 14 die Toleranzgröße T für eine ausbeuterelevante Verarbeitungsgröße V vorausgesagt werden. Die Ermittlung der Toleranzgröße T kann also vor, während und/oder nach der Verarbeitung des Eingangsfleischproduktes 8 erfolgen.

Nach der Verarbeitung des zugeführten Eingangsfleischproduktes 8 zu dem Ausgangsfleischprodukt 16 wird bevorzugt geprüft und/oder überwacht, ob die ausbeuterelevante Verarbeitungsgröße V in dem durch die Toleranzgröße T bestimmten "zulässigen" Wertebereich ist.

In der Praxis hat sich ferner als vorteilhaft herausgestellt, folgende Verfahrensschritte auszuführen: Nachverfolgung von Eingangsfleischprodukten 8, und/oder Erfassen von Ausgangsproduktdaten, insbesondere Geometrie- und/oder Gewichtsdaten, des von der Fleischverarbeitungseinheit 4 weggeführten, insbesondere korrespondierenden und/oder ausbeuterelevanten, Ausgangsfleischproduktes mittels einer Ausgangssensoreinheit 18 der Fleischverarbeitungsmaschine 2, wobei die Steuerungseinheit 12 mit der Ausgangssensoreinheit 18 verbunden ist, und/oder Ermitteln der ausbeuterelevanten Verarbeitungsgröße V in Abhängigkeit der Eingangsproduktdaten L und den dazu korrespondierenden Ausgangsproduktdaten G, insbesondere durch Differenzbildung und/oder Verhältnisbildung. Dies hat den Vorteil, dass die ausbeuterelevante Verarbeitungsgröße V für einander zugehörige Fleischprodukte 8, 16 ermittelt wird. Um dies zu ermöglichen, ist die Nachverfolgung von Fleischprodukten 6, insbesondere Eingangsfleischprodukten 8 und/oder Ausgangsfleischprodukten 16, vorgesehen. Bereits zuvor wurde erläutert, dass das Förderelement 22 bevorzugt mit der Steuerungseinheit 12 verbunden ist. Alternativ und/oder ergänzend kann eine Bewegungssensoreinheit 24 zur Erfassung der Bewegung des Förderelements 22 und/oder der geförderten Fleischprodukte 6, 8, 16 vorgesehen sein. Ist das Förderelement 22 beispielsweise ein Förderband 22, kann die Bewegungssensoreinheit 24 die Geschwindigkeit des Förderbands 22 erfassen. Die Bewegungssensoreinheit 24 ist zum Erfassen einer Positions- und/oder Geschwindigkeitsgröße des Förderelements 22 eingerichtet und/oder ausgestaltet. Ferner kann es vorgesehen sein, dass das Förderelement 22 ebenfalls eine entsprechende Bewegungssensoreinheit aufweist. Die mindestens eine Bewegungssensoreinheit 24 ist zudem mit der Steuerungseinheit 12 verbunden. Wird von der Eingangssensoreinheit 10 ein Eingangsfleischprodukt 8 erfasst und ist die Geschwindigkeit des Förderelements 22 bekannt, mit der das Eingangsfleischprodukt 8 durch die Fleischverarbeitungseinheit 4 gefördert wird, so ist auch die jeweilige Position des Eingangsfleischproduktes 8 beziehungsweise das durch die Verarbeitung des Eingangsfleischproduktes 8 hergestellte Ausgangsfleischprodukt 16 bekannt. Des Weiteren kann mindestens eine Prozesssensoreinheit 26 vorgesehen sein. Eine derartige Prozesssensoreinheit 26 kann von der Fleischverarbeitungseinheit 4 umfasst sein. Auch die Prozesssensoreinheit 26 kann zum Erfassen von Geometrie- und/oder Gewichtsdaten des jeweils in Verarbeitung befindlichen Fleischproduktes eingerichtet und/oder ausgebildet sein. Bevorzugt ist die mindestens eine Prozesssensoreinheit 26 mit der Steuerungseinheit 12 verbunden. Der Steuerungseinheit 12 stehen somit alle notwendigen Informationen zur Verfügung, um das Eingangsfleischprodukt 8 während des Zuführens zu der Fleischverarbeitungseinheit 4, während des Förderns in der Fleischverarbeitungseinheit 4 und/oder während des Wegförderns von der Fleischverarbeitungseinheit 4 zu verfolgen. Die Nachverfolgung von Eingangsfleischprodukten 8 erfolgt somit mittels der Steuerungseinheit 12, die dazu die Bewegung des Förderelements 22 auswertet und die Position des Eingangsfleischproduktes 8 beziehungsweise des korrespondierenden Ausgangsfleischproduktes 16 durch Auswerten der von der mindestens einen Bewegungssensoreinheit 24 erfassten Bewegungsinformation, insbesondere Geschwindigkeit des Förderelements 22 ermittelt. Jedes Ausgangsfleischprodukt 16 kann somit einem Eingangsfleischprodukt 8 zugeordnet werden. Dabei wird das Ausgangsfleischprodukt 16 dem zugeführten Eingangsfleischprodukt 8 zugeordnet, aus dem es verarbeitet wurde. Dabei ist es möglich, dass aus einem Eingangsfleischprodukt 8 mehrere Ausgangsfleischprodukte 16 entstehen. Es können somit auch mehrere Ausgangsfleischprodukte 16 dem gleichen Eingangsfleischprodukt 8 zugeordnet werden. Mit anderen Worten korrespondiert mindestens ein Ausgangsfleischprodukt 16 zu einem Eingangsfleischprodukt 8. Entsprechendes gilt für die erfassten Produktdaten L, G. Die mittels der Ausgangssensoreinheit 18 erfassten Ausgangsproduktdaten G mindestens eines Ausgangsfleischproduktes 16 korrespondieren zu den mittels der Eingangssensoreinheit 10 erfassten Eingangsproduktdaten L eines Eingangsfleischproduktes 8. So kann beispielsweise das Gewicht eines Eingangsfleischproduktes 8 gemessen werden. Dies kann beispielsweise ein Fisch mit einem Gewicht von 2 kg sein. Das Eingangsfleischprodukt 8 beziehungsweise der Fisch wird anschließend durch die Fleischverarbeitungseinheit 4 zu dem mindestens einem Ausgangsfleischprodukt 16 verarbeitet. Dies können bei dem Fisch beispielsweise zwei Fischfilets von jeweils 750 g sein. Nach der Verarbeitung werden die Ausgangsfleischprodukte 16 von der Ausgangssensoreinheit 18 gemessen und deren Ausgangsproduktdaten G erfasst. Im Falle der Fischfilets wäre dies beispielsweise das Gewicht von jeweils 750 g. Außerdem würde in diesem Fall das Gewicht des jeweiligen Fischfilets (750 g) zu dem Gewicht des Fisches (2 kg) korrespondieren. Die ausbeuterelevante Verarbeitungsgröße, insbesondere der Ertrag, könnte durch Verhältnisbildung der 2 x 750 g des Fischfilets zu den 2 kg des zugeführten Fisches ermittelt werden. Andere Ermittlungs- beziehungsweise Berechnungsweisen sind damit nicht ausgeschlossen.

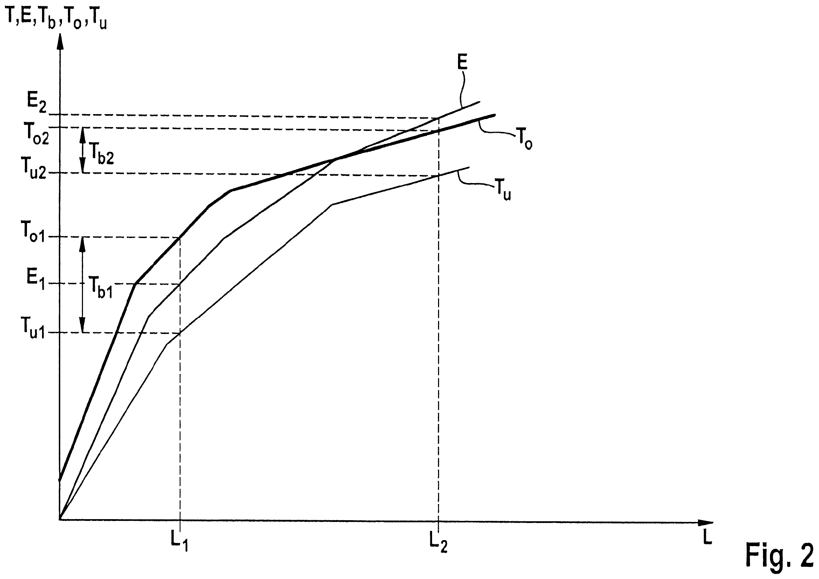

Es hat sich als vorteilhaft erwiesen, wenn die ausbeuterelevante Verarbeitungsgröße V der Ertrag E der Verarbeitung ist. Grundsätzlich dient die Fleischverarbeitungseinheit 4 zur Verarbeitung von dieser zugeführten Eingangsfleischprodukten 8 zu Ausgangsfleischprodukten 16. Der Ertrag, wie dieser beispielsweise auch in Fig. 2 in Abhängigkeit von Eingangsproduktdaten L dargestellt ist, hat in der Praxis eine hohe Bedeutung. Dieser bestimmt nicht selten über das finanzielle Ergebnis, das mit einer derartigen Fleischverarbeitungsmaschine 2 erzielbar ist. Vorzugsweise ist der Ertrag die absolute oder relative Ausbeute, wie sie bereits zuvor erläutert wurde.

In Fig. 2 ist ferner beispielhaft die Toleranzgröße T für die ausbeuterelevante Verarbeitungsgröße V dargestellt. Die Toleranzgröße T ist vorzugsweise ein Toleranzbereich Tb, ein oberer Toleranzwert To und/oder ein unterer Toleranzwert Tu. In Abhängigkeit der Eingangsproduktdaten L (hier eindimensional dargestellt) sind die entsprechenden oberen Toleranzwerte To und die unteren Toleranzwerte Tu sowie der zumeist dazwischen liegende Ertrag E wiedergegeben. Der Toleranzbereich Tb kann als der Bereich aufgefasst werden, der zwischen dem oberen Toleranzwert To und dem unteren Toleranzwert Tu ist. Werden beispielsweise die Längen L1, L2 als Eingangsproduktdaten L von zwei Eingangsfleischprodukten 8 erfasst, kann als Toleranzgröße T für die Längen L1, L2 jeweils ein oberer Toleranzwert To, ein unterer Toleranzwert Tu und/oder ein zugehöriger Toleranzbereich Tb ermittelt werden. Wie zuvor erläutert, erfolgt diese Ermittlung mittels eines mathematischen Modells und/oder einer Datenbank 14. Werden die Eingangsfleischprodukte 8 durch die Fleischverarbeitungseinheit 4 zu Ausgangsfleischprodukten 16 verarbeitet und anschließend deren Ausgangsproduktdaten G von der Ausgangssensoreinheit 18 erfasst, kann mittels der Steuerungseinheit 12 die tatsächliche ausbeuterelevante Verarbeitungsgröße V, insbesondere der Ertrag E der Verarbeitung, ermittelt werden. Für das erste Eingangsfleischprodukt 8 mit der Länge L1 wird auf diese Weise ein Ertrag E1 ermittelt. Die entsprechende Toleranzgröße T, also beispielsweise der obere Toleranzwert To1, der untere Toleranzwert Tul und/oder der Toleranzbereich Tb1 sind ebenfalls in Fig. 2 dargestellt. Der Ertrag E1 liegt innerhalb des Toleranzbereichs Tb1. Außerdem ist der Ertrag E1 geringer als ein oberer Toleranzwert To1 und/oder größer als ein unterer Toleranzwert Tu1. Der Ertrag E1 wäre also ein "zulässiger" Wert. Es besteht also kein Fehler. Anders ist das Ergebnis hinsichtlich des zweiten Eingangsfleischproduktes, dessen Länge zu dem Bezugszeichen L2 korrespondiert. Entsprechend wurde auch hier der korrespondierende Ertrag E2 ermittelt. Dieser ist zwar größer als der zughörige untere Toleranzwert Tu2. Jedoch ist der Ertrag E2 weder im Toleranzbereich Tb2 noch kleiner als der obere Toleranzwert To2. Der Ertrag E2 ist deshalb außerhalb des "zulässigen" Bereichs. Hier besteht deshalb ein Fehler. Dieser Fehler wurde jedoch nur erkannt, weil sich die Toleranzgröße T in Abhängigkeit der erfassten Eingangsproduktdaten L anpasst. Dies ist beispielsweise daran zu erkennen, dass der Toleranzbereich Tb2 kleiner ausfällt als der Toleranzbereich Tb1. Wäre der Toleranzbereich Tb2 genau so groß wie der Toleranzbereich Tb1, käme es bei der Überwachung zu dem Ergebnis, dass auch für das zweite Eingangsfleischprodukt 8 kein Fehler vorliege. Mit einer derartigen statischen und/oder festen Größe können die Fehler jedoch nicht immer richtig erkannt werden. Dies gilt neben der Fehlererkennung im Übrigen auch für andere Auswertungsparameter, wie beispielsweise der Leistung der Fleischverarbeitungsmaschine 2 und/oder einer Abweichung von einem optimalen Ertrag.

Eine weitere vorteilhafte Ausgestaltung des erfindungsgemäßen Verfahrens kennzeichnet sich durch eine Ausgabe eines Warnsignals mittels einer optischen und/oder akustischen Ausgabeeinheit 20, wenn die ermittelte, ausbeuterelevante Verarbeitungsgröße V außerhalb des Toleranzbereichs Tb ist. Bezugnehmend auf Fig. 2 ist dies der Fall für das Eingangsfleischprodukt 8, das zu dem Ertrag E2 beziehungsweise der Länge L2 korrespondiert. Der Ertrag E2 ist außerhalb des Toleranzbereichs Tb2. Der Ertrag E2 ist also außerhalb des zulässigen Bereichs für den Ertrag. Die akustische Ausgabeeinheit 20 kann beispielsweise ein Lautsprecher bilden. Die optische Ausgabeeinheit 20 kann beispielsweise ein Bildschirm und/oder ein Leuchtmittel sein. Das Warnsignal weist das Bedienpersonal darauf hin, dass die Verarbeitung des zugehörigen Eingangsfleischprodukts 8 nicht korrekt erfolgte.

Eine weitere vorteilhafte Ausgestaltung des erfindungsgemäßen Verfahrens kennzeichnet sich durch eine Ausgabe eines Statussignals, wenn die ermittelte Verarbeitungsgröße V innerhalb des Toleranzbereiches Tb ist. Wie zuvor ist mit der ermittelten Verarbeitungsgröße V die tatsächliche Verarbeitungsgröße V gemeint. Auch hier kann es sich um den Ertrag E handeln. In Fig. 2 ist eine derartige Ertragsgröße mit E1 gekennzeichnet, die zu der Länge L1 eines korrespondierenden Eingangsfleischproduktes 8 gehört. Der Ertrag E1 ist innerhalb des zugehörigen Toleranzbereiches Tb1. Die Verarbeitung erfolgte somit fehlerfrei beziehungsweise erwartungsgemäß. Die Ausgabe des Statussignals kann ebenfalls mittels der optischen und/oder akustischen Ausgabeeinheit 20 erfolgen. Ferner kann es vorgesehen sein, dass der Wert des Statussignals in Abhängigkeit von einer Abweichung zwischen der ermittelten Verarbeitungsgröße V, also beispielsweise dem Ertrag E1, und einer der Bereichsgrenzen To1, Tul des Toleranzbereichs Tb eingestellt wird. Der Wert des Statussignals kann beispielsweise die Lautstärke einer akustischen Ausgabeeinheit 20 sein. Der Wert des Statussignals kann aber auch die Helligkeit, Intensität und/oder Farbwahl bei der Ausgabe mittels der optischen Ausgabeeinheit 20 sein.

Eine weitere vorteilhafte Ausgestaltung der Erfindung zeichnet sich dadurch aus, dass der Toleranzgröße T in Abhängigkeit der Eingangsproduktdaten L oder der Eingangsproduktdaten L und Maschinenparametern mindestens ein Wert aus der Datenbank 14 zugeordnet wird, wobei von der Datenbank 14 Toleranzgrößen T in Abhängigkeit von Eingangsproduktdaten L oder von Eingangsproduktdaten und Maschinenparametern gespeichert sind. In einer besonders vorteilhaften Ausgestaltung weist die Datenbank 14 eine Vielzahl von unterschiedlichen Kombinationen der Eingangsproduktdaten beziehungsweise der Eingangsproduktdaten und Maschinenparametern auf, wobei für jede Kombination der Eingangsproduktdaten oder für jede Kombination der Eingangsproduktdaten L und Maschinenparametern eine entsprechende Toleranzgröße T in der Datenbank 14 gespeichert ist. Werden mittels der Eingangssensoreinheit 10 Eingangsproduktdaten L, insbesondere Geometrie- und/oder Gewichtsdaten, erfasst beziehungsweise gemessen und werden vorzugsweise diejenigen Maschinenparameter berücksichtigt, die für die Verarbeitung der Eingangsfleischprodukte 8 vorgesehen sind, kann ein Abgleich mit den entsprechenden Werten aus der Datenbank 14 in der Weise erfolgen, dass genau der gleiche oder die gleichen Werte in der Datenbank und/oder derjenige Datensatz der Eingangsproduktdaten L beziehungsweise Eingangsproduktdaten L und Maschinenparameter in der Datenbank 14 gefunden wird, der, insbesondere im Mittel, die kleineste Abweichung zu den erfassten Werten aufweist. Der Toleranzgröße T kann anschließend der Wert zugeordnet werden, der in der Datenbank entsprechend des ermittelten Parameters beziehungsweise Datensatz für die Toleranzgröße T gespeichert ist. Mit anderen Worten könnten die Eingangsproduktdaten L oder die Eingangsproduktdaten L und die Maschinenparameter verwendet werden, um aus der Datenbank 14 eine den Eingangsproduktdaten L und Eingangsproduktdaten L und Maschinenparametern entsprechende Toleranzgröße T auszulesen.

Eine weitere vorteilhafte Ausgestaltung der Erfindung sieht vor, dass die Toleranzgröße T aus den Eingangsproduktdaten L mittels eines Morphologiemodells als das mathematische Modell berechnet wird. Das Morphologiemodell kann ein spezielles Morphologiemodell für das zu verarbeitende Fleischprodukt 6, insbesondere Fisch, sein. Insbesondere für die Verarbeitung von Fischen kann der sogenannte Korpulenzfaktor (K-Faktor oder KF) in dem Morphologiemodell berücksichtigt werden. Der K-Faktor kann für jeden Fisch, beispielsweise für jede Fischkategorie unterschiedlich sein. Des Weiteren kann ein Ausbeutefaktor (AF) in dem Morphologiemodell berücksichtigt werden. Dazu kann der Ausbeutefaktor für das jeweils zu verarbeitende Fleischprodukt unterschiedlich und/oder vorgebbar sein. Ein einfacheres Morphologiemodell zur Ermittlung der Toleranzgröße, insbesondere eines unteren Toleranzwertes Tu, für einen Fisch könnte unter Berücksichtigung der zuvor genannten Faktoren und unter der beispielhaften Annahme, dass die Länge L des zugeführten Fisches 8 die Eingangsproduktdaten darstellen, wie folgt ausgestaltet sein:

$$Tu = (\text{Länge des Fisches})^3 \text{ x KF x AF} \div 100.$$

Grundsätzlich können der Korpulenzfaktor und/oder der Ausbeutefaktor von den gemessenen Geometrie- und/oder Gewichtsdaten des Eingangsfleischproduktes 8 abhängen.

Eine weitere vorteilhafte Ausgestaltung des Verfahrens zeichnet sich dadurch aus, dass die Toleranzgröße T aus den Eingangsproduktdaten L und Maschinenparametern mittels eines Morphologiemodells und eines Maschinenmodells, zusammen als das mathematische Modell, berechnet wird. Dabei kann das Morphologiemodell wie zuvor erläutert ausgestaltet sein. Unter Maschinenparametern können grundsätzlich sämtliche oder zumindest ein Teil der Parameter zur Einstellung der Fleischverarbeitungsmaschine 2 beziehungsweise Fleischverarbeitungseinheit 4 verstanden werden. Bei einer Fleischverarbeitungseinheit 4 können dies beispielsweise die Parameter sein, die den jeweiligen Abstand mindestens eines Schneidwerkzeuges, insbesondere den Messerabstand von Bauchmessern, Flankenmessern, Rückenmessern und/oder Trennmesser, bei Fischverarbeitungsmaschinen bestimmen. Wird beispielsweise durch die Eingangssensoreinheit 10 die Außenquerschnittsbreite (DA) eines zu verarbeitenden Fisches sowie durch ein Morphologiemodell die Außenquerschnittsbreite des Grätengerüstes (DI) ermittelt, und haben beispielsweise die Trennmesser der Fleischverarbeitungseinheit 4 (hier bevorzugt eine Fischverarbeitungseinheit) einen bestimmten oder variablen Messerabstand (MA), so kann ein einfaches Maschinenmodell wie folgt ausgestaltet sein:

$$MF = \left\{ \begin{array}{c} \left( \dfrac{DA - MA}{DA - DI} \right) \textit{ für } DA > MA > DI \\ 0 \qquad \textit{sonst} \end{array} \right\}$$

MF bezeichnet hierbei den Maschinenfaktor. Der Maschinenfaktor kann auch bei der Berücksichtigung der Toleranzgröße T Einfluss finden. Die Toleranzgröße T kann somit mittels des Morphologiemodells und des Maschinenmodells aus den Eingangsproduktdaten (insbesondere der jeweiligen Länge L) wie folgt bestimmt werden:

$$Tu = L^3 \text{ x KF x AF x MF} \div 100.$$

Durch die Eingangsproduktdaten L beziehungsweise Geometrie- und Gewichtsdaten des Eingangsfleischprodukts 8 und mittels des Morphologie- und Maschinenmodells können auch diejenigen Informationen in die Ermittlung der Toleranzgröße T eingehen, die die Anpassung der Fleischverarbeitungsmaschine 2 beziehungsweise Fleischverarbeitungseinheit 4 auf das zu verarbeitende Eingangsfleischprodukt 8 beschreiben.

Eine weitere vorteilhafte Ausgestaltung der Erfindung zeichnet sich dadurch aus, dass die erfindungsgemäßen und/oder vorteilhaften Verfahrensschritte für jedes der Fleischverarbeitungseinheit 4 zugeführte Eingangsfleischprodukt 8 ausgeführt werden. Die Steuerungseinheit 12 kann dazu eine entsprechend angepasste Rechenleistung und/oder entsprechende Bauelemente aufweisen. Damit ist es möglich, die Fleischverarbeitungsmaschine 2 beziehungsweise die Fleischverarbeitungseinheit 4 eingangsfleischproduktindividuell zu überwachen. Etwaige Fehler der Fleischverarbeitungseinheit 4 können somit dem jeweiligen Eingangsfleischprodukt 8 und/oder aufgrund der bevorzugten Nachverfolgung dem mindestens einen Ausgangsfleischprodukt 16 zugeordnet werden. Eine Optimierung der Fleischverarbeitungsmaschine 2 ist somit besonders effizient möglich. Denn die Ursachen können anhand des Eingangsfleischprodukts 8 beziehungsweise des mindestens einen Ausgangsfleischprodukts 16 analysiert werden und die Fleischverarbeitungseinheit 4 kann daraufhin auf derartige Produkte optimal eingestellt werden. Eine alternative Ausgestaltung sieht vor, dass die erfindungsgemäßen und/oder vorteilhaften Verfahrensschritte stichprobenhaft ausgeführt werden. Einer zugehörigen Stichprobe kann ein Eingangsfleischprodukt 8 oder mehrere Eingangsfleischprodukte 8 zugeordnet werden. Damit sinkt der Rechenaufwand. Gleichzeitig sinkt aber auch die Genauigkeit, ein Fehler einem bestimmten Eingangsfleischprodukt 8 zuzuordnen. Eine weitere Ausgestaltung der Erfindung sieht daher vor, die erfindungsgemäßen und/oder vorteilhaften Verfahrensschritte zyklisch mit einer vorgebbaren Periodizität auszuführen. Eine derartige Periodizität ist von Vorteil, um die Rechenleistung für die Steuerungseinheit 12 und/oder der damit verbundenen Komponenten zu senken.

In den vorangegangenen Abschnitten wurde erläutert, dass die Datenbank 14 verwendet werden kann, um die Toleranzgröße T zu ermitteln. Die Einträge in der Datenbank 14 können dazu, insbesondere zuvor, vorgebbar sein. In der Praxis hat sich als vorteilhaft herausgestellt, für bestimmte Fleischverarbeitungseinheiten 4 bestimmte Standarddatenbanken zu verwenden. Diese Datenbanken 14 können mit Werten gefüllt sein, die geprüft und für vertrauenswürdig eingestuft wurden, um somit ebenfalls möglichst vertrauenswürdige Ergebnisse für die jeweilige Toleranzgröße T bereitzustellen. In der Praxis hat sich jedoch auch gezeigt, dass die Ergebnisse zur Ermittlung der Toleranzgröße T noch weiter verfeinert werden können, wenn die Datenbank 14 während der Verarbeitung und/oder dazu zeitversetzt aktualisiert wird. Eine vorteilhafte Ausgestaltung des Verfahrens zeichnet sich deshalb durch die folgenden Schritte aus: Vorgabe einer Toleranzgröße T für die zu den erfassten Eingangsproduktdaten L korrespondierenden Verarbeitungsgröße V, und/oder Ermitteln der Toleranzgröße T mittels der zu den erfassten Eingangsproduktdaten L korrespondierenden Verarbeitungsgröße V, und/oder Bestimmen eines Datenbankparametersatzes umfassend die Eingangsproduktdaten L und/oder die Toleranzgröße T für die zugehörige Verarbeitungsgröße V und/oder die insbesondere zugehörigen Maschinenparameter, und/oder Aktualisieren der Datenbank 14 mit dem Datenbankparametersatz. Werden beispielsweise die Eingangsproduktdaten L eines Eingangsfleischprodukts 8 erfasst, anschließend von der Fleischverarbeitungseinheit 4 zu mindestens einem Ausgangsfleischprodukt 16 verarbeitet, wobei bestimmte Maschinenparameter bei der Fleischverarbeitungseinheit 4 eingestellt waren, und anschließend die Ausgangsproduktdaten G des mindestens einen Ausgangsfleischprodukts 16 mittels der Ausgangssensoreinheit 18 erfasst, kann dazu anschließend, insbesondere durch manuelle Eingabe, eine zugehörige Toleranzgröße T bestimmt werden. Mittels der Ausgangsproduktdaten G und der Eingangsproduktdaten L kann ferner eine zugehörige Verarbeitungsgröße V, insbesondere durch Differenz und/oder Verhältnisbildung, ermittelt werden. Damit sind eine Vielzahl einander zugehöriger Werte für einen Verarbeitungsschritt bekannt. Diese einander zugehörigen Werte oder ein Teil dieser Werte können einen Datenbankparametersatz bilden. Es ist deshalb möglich, dass der Datenbankparametersatz die Eingangsproduktdaten L, die Ausgangsproduktdaten G, die Verarbeitungsgröße V, die Maschinenparameter und die Toleranzgröße, oder eine Teilmenge der zuvor genannten Begriffe umfasst. Die Aktualisierung der Datenbank mit dem Datenbankparametersatz kann ein Neuanlegen und/oder ein Überschreiben eines bestehenden Datenbankparameters oder Datenbankparametersatzes sein.

Nicht immer ist jedoch die Aktualisierung sinnvoll. Hat die Verarbeitung beispielsweise zu einem schlechten Ergebnis geführt, weil beispielsweise beim Abtrennen des Filetfleisches auch ein Knochen und/oder eine Gräte an- oder abgeschnitten wurde, und dieser Teil des Knochens beziehungsweise der Gräte an dem Filetfleisch verblieben ist, wäre eine Aktualisierung der Datenbank 14 nachteilig. Vorzugsweise erfolgt die Aktualisierung der Datenbank 14, wenn die Verarbeitungsgröße V innerhalb des, insbesondere korrespondierenden, Toleranzbereichs Tb ist. Wird beispielsweise zunächst eine Standarddatenbank verwendet, deren Toleranzbereich Tb noch sehr großzügig, also sehr weit gefasst, ausgestaltet ist, kann mit dieser eine Vorauswahl der Verarbeitungsschritte getroffen werden, die für die Aktualisierung der Datenbank in Frage kommen. Ist beispielsweise Ertrag E1, wie dieser in Fig. 2 dargestellt ist, innerhalb des Toleranzbereichs Tb1 (aus der Standarddatenbank), so ist dieser Ertrag E1 zunächst vertrauenswürdig. Für eine Aktualisierung könnte der korrespondierende Toleranzbereich Tb entsprechend verkleinert werden, so dass die Datenbank 14 diesbezüglich optimiert wird. Wird hingegen festgestellt, dass Erträge mehrfach, wie beispielsweise der Ertrag E2, außerhalb des Toleranzbereichs, hier also der Toleranzbereich Tb2, sind, könnte dies ein Indiz dafür sein, dass der zugehörige Toleranzbereich Tb2 zu klein und/oder falsch gewählt beziehungsweise bestimmt wurde. Auch in diesem Fall könnte eine Anpassung von Vorteil sein. Es kann deshalb vorgesehen sein, dass eine Aktualisierung der Datenbank 14 erfolgt, wenn die Toleranzgröße T außerhalb des Toleranzbereichs Tb ist.

Für die einseitigen Bereichsgrenzen, also der untere Toleranzwert Tu beziehungsweise der obere Toleranzwert To gilt Entsprechendes. Auch hier kann es von Vorteil sein, die Aktualisierung der Datenbank 14 durchzuführen, wenn die Verarbeitungsgröße V kleiner als der obere Toleranzwert To ist, wenn die Verarbeitungsgröße V größer als der obere Toleranzwert To ist, wenn die Verarbeitungsgröße V größer als der untere Toleranzwert Tu ist, oder wenn die Verarbeitungsgröße V kleiner als der untere Toleranzwert Tu ist. Je nach Anwendungszweck und/oder Häufigkeit abweichender Ergebnisse, kann eine Aktualisierung der Datenbank 14 notwendig und/oder sinnvoll sein.

Eine vorteilhafte Ausgestaltung der Erfindung zeichnet sich dadurch aus, dass mehrere Fleischverarbeitungsmaschinen, insbesondere gleichzeitig, überwacht werden. Hierbei kann eine Überwachung maschinenindividuell und/oder maschinenübergreifend erfolgen. Insbesondere für die maschinenübergreifende Überwachung kann es vorgesehen sein, dass die Verarbeitungsgrößen von zumindest im Wesentlichen gleichen, zugehörigen Eingangsfleischprodukten verglichen werden. Sofern eine große Abweichung, also insbesondere größer als (oder gleich) 5%, festgestellt wird, erfolgt keine Aktualisierung beziehungsweise bleiben die erfassten Größen bei der Aktualisierung unberücksichtigt. Sofern eine sehr geringe Abweichung, also insbesondere kleiner als 5%, festgestellt wird, wird der Mittelwert der jeweiligen Größen, insbesondere der zugehörigen Verarbeitungsgrößen, bei der Aktualisierung berücksichtigt.

Eine weitere vorteilhafte Ausgestaltung der Erfindung zeichnet sich dadurch aus, dass eine Aktualisierung in Abhängigkeit der Transportzeit und/oder des Transportweges des Eingangsfleischproduktes erfolgt. So ist beispielsweise bei einer längeren Transportzeit und/oder einem längeren Transportweg mit einem geringeren Ertrag zu rechnen. Vorzugsweise werden die Transportzeit und/oder der Transportweg als linearer Faktor bei der Ermittlung der Toleranzgröße berücksichtigt.

Grundsätzlich können Standarddatenbanken 14 für eine Vielzahl von Fleischsorten und/oder -kategorien vorbestimmt sein. Es hat sich jedoch in der Praxis gezeigt, dass unterschiedlichste Rahmenbedingungen der Tierzucht und/oder -mast Einfluss auf das Ergebnis der Fleischverarbeitung haben. So kann der gleiche Fisch aufgrund unterschiedlicher Futterbedingungen und/oder unterschiedlicher Wassertemperaturen unterschiedliche Körperformen annehmen.

Um diesen vielfach sehr unterschiedlichen Rahmenbedingung auch hinsichtlich einer möglichst verlässlichen Ermittlung der Toleranzgröße Rechnung zu tragen, können weitere vorteilhafte Ausgestaltungen der Erfindung in Betracht kommen, die im Folgenden erläutert werden. So kann es beispielsweise vorgesehen sein, dass eine Aktualisierung der Datenbank in Abhängigkeit der Jahreszeit und/oder des Ortes, und zwar jeweils des Fangens des Tieres und/oder des Schlachten des Tieres und/oder der Verarbeitung des Tieres, erfolgt. Hierzu können jeweils angepasste Datensätze vorgesehen sein, um die Datenbank zu aktualisieren. Des Weiteren kann es vorgesehen sein, dass eine Aktualisierung der Datenbank in Abhängigkeit der Fütterung der zu verarbeitenden Tiere, insbesondere von dessen Futter, Fütterungsort und/oder Fütterungszeiten, erfolgt. So können für unterschiedliche Fütterungen jeweils korrespondierende Datensätze vorgesehen sein, um die Datenbank zu aktualisieren.

Um der zuvor genannten Vielfalt an unterschiedlichen Tierformen und/oder Eingangsfleischprodukten 8 zu begegnen, hat sich außerdem und/oder alternativ ein Einrichtungsbetrieb der Fleischverarbeitungsmaschine 2 als vorteilhaft erwiesen. Eine bevorzugte Ausgestaltung des erfindungsgemäßen Verfahrens umfasst deshalb einen Einrichtbetrieb der Fleischverarbeitungsmaschine 2 mit den Schritten: Neufestsetzen der Datenbankparameter mit mindestens einem vorgebbaren Musterparameterdatensatz, und/oder Zuführen von Referenzfleischprodukten als Eingangsfleischprodukte 8 zu der Fleischverarbeitungseinheit 4. Die mit dem mindestens einen Musterparameterdatensatz neu festgesetzte Datenbank 14 kann dabei beispielsweise der zuvor genannten Standarddatenbank 14 entsprechen. Es ist jedoch auch möglich, dass mindestens ein andersartiger Musterparameterdatensatz verwendet wird, um die Werte der Datenbank zu generieren. Auch ist es denkbar, dass der Musterparameterdatensatz eine Nullmenge darstellt. Die Referenzfleischprodukte können sich dadurch auszeichnen, dass sie eine Vielzahl unterschiedlicher Eingangsfleischprodukte 8 darstellen, um die Datenbank 14 über einen möglichst weiten Bereich aktualisieren zu können. Denn mit dem Zuführen der Referenzfleischprodukte kann ebenfalls die zuvor erläuterte Bestimmung eines Datenbankparametersatzes umfassend die Eingangsproduktdaten L, die Maschinenparameter und/oder die Toleranzgröße T, sowie ein Aktualisieren der Datenbank 14 mit dem zuvor bestimmten Datenbankparametersatz umfassen. Mit anderen Worten kann die Datenbank 14 durch die Referenzfleischprodukte auf die zu erwartenden Eingangsfleischprodukte 8 gerichtet aktualisiert werden.

Eine weitere vorteilhafte Ausgestaltung des Verfahrens zeichnet sich durch ein Registrieren jeweils des zugeführten Eingangsfleischproduktes 8 aus, dessen Eingangsproduktdaten L außerhalb eines vorgegebenen Produkttoleranzbereichs Pe für zuzuführende Eingangsfleischprodukte 8 sind. Ist es beispielsweise bekannt, dass die Fleischverarbeitungseinheit 4 Eingangsfleischprodukte 8 bis zu einer Breite von 6 cm verarbeiten kann, so ist für ein Eingangsfleischprodukt 8 mit einer Breite von 8 cm zu erwarten, dass die Verarbeitung mittels der Fleischverarbeitungseinheit 4 nicht fehlerfrei erfolgen wird. Dieser Informationsgehalt ist bereits vor der eigentlichen Verarbeitung durch die Fleischverarbeitungseinheit 4 bekannt. Um diese Information im weiteren Verfahren vorteilhaft verwenden zu können, ist die Registrierung eines derartigen Eingangsfleischprodukts 8 von Vorteil. Eine weitere bevorzugte Ausgestaltung des Verfahrens zeichnet sich durch ein Registrieren jeweils des weggeführten Ausgangsfleischprodukts 16 aus, dessen Ausgangsproduktdaten G außerhalb eines vorgegebenen Produkttoleranzbereichs Pa für wegzuführende Ausgangsfleischprodukte 16 sind. Ist beispielsweise für die Fleischverarbeitungseinheit 4 bekannt, dass deren Messer zum Zuschneiden der Filets auf einen so geringen Abstand zusammengefahren werden können, dass die Filets mindestens eine Breite von 3 cm aufweisen, und wird von der Ausgangssensoreinheit 18 als Ausgangsfleischprodukt 16 ein derartiges Filet mit einer Breite von 2 cm erfasst, so ist davon auszugehen, dass es sich hierbei um eine nicht fehlerfrei Verarbeitung handelt. Diese Informationen können für das weitere Verfahren von Vorteil sein.

Aufgrund der zuvor genannten Ausgestaltungen erlaubt diese Registrierung eines Eingangsfleischproduktes 8 und/oder eines Ausgangsfleischproduktes 16, die Randbedingungen der Fleischverarbeitungseinheit 4 im Verhältnis zu den Fleischprodukten 8, 16 zu bewerten. Es ist deshalb vorzugsweise vorgesehen, dass ein Warn- und/oder Statussignal für ein registriertes Eingangs- und/oder Ausgangsfleischprodukt 8, 16 mit einer vorgegebenen Kennzeichnung bevorzugt mittels der optischen und/oder akustischen Ausgabeeinheit 20, ausgegeben wird. Diese Kennzeichnung kann dabei registrierungsindividuell ausgestaltet sein.

Wie zuvor erläutert, weist die Registrierung, insbesondere des jeweiligen zugeführten Eingangsfleischproduktes 8, daraufhin, dass die Verarbeitung mittels der Fleischverarbeitungseinheit 4 nicht fehlerfrei erfolgen wird und/oder erfolgen kann. Es ist deshalb bevorzugt vorgesehen, dass ein zu dem registrierten Eingangsfleischprodukt 8 zugehöriger Datenbankparametersatz bei der Aktualisierung der Datenbank 14 unberücksichtigt bleibt. Alternativ oder ergänzend kann es vorgesehen sein, dass ein zu dem registrierten Ausgangsfleischprodukt 16 zugehöriger Datenbankparametersatz bei der Aktualisierung der Datenbank 14 unberücksichtigt bleibt. Damit wird besonders einfach und effektiv verhindert, dass die Datenbank mit fehlerhaften und/oder unvorteilhaften Datenbankparametersätzen aktualisiert und/oder verschlechtert wird.

Erfindungsgemäß ist außerdem eine Fleischverarbeitungsmaschine 2 zur Fleischverarbeitung mit einer Fleischverarbeitungseinheit 4 zur Verarbeitung von dieser zugeführten Eingangsfleischprodukten 8, einer Eingangssensoreinheit 10, und einer Steuerungseinheit 12 zur Steuerung der Fleischverarbeitungseinheit 4 vorgesehen, wobei die Steuerungseinheit 12 mit der Eingangssensoreinheit 10 verbunden ist, und wobei die Fleischverarbeitungsmaschine 2 zum Ausführen des Verfahrens nach einem der zuvor genannten, insbesondere vorteilhaften, Ausgestaltungen eingerichtet und/oder ausgebildet ist.

**Patentansprüche**

1. Verfahren zur Überwachung einer Fleischverarbeitungsmaschine (2) mit

    (a) einer Fleischverarbeitungseinheit (4) zur Verarbeitung von dieser zugeführten Eingangsfleischprodukten (8) zu Ausgangsfleischprodukten (16),
    (b) einer Eingangssensoreinheit (10), und
    (c) einer Steuerungseinheit (12) zur Steuerung der Fleischverarbeitungseinheit (4), wobei die Steuerungseinheit (12) mit der Eingangssensoreinheit (10) verbunden ist, umfassend die Schritte:
    (d) Zuführen von Eingangsfleischprodukten (8) an die Fleischverarbeitungseinheit (4),
    (e) Erfassen von Eingangsproduktdaten (L), insbesondere Geometrie- und/oder Gewichtsdaten, der der Fleischverarbeitungseinheit (4) zugeführten Eingangsfleischprodukte (8) mittels der Eingangssensoreinheit (10),
    (f) Ermitteln einer Toleranzgröße (T) für eine ausbeuterelevante Verarbeitungsgröße (V) mittels eines mathematischen Modells oder einer Datenbank (14), jeweils in Abhängigkeit der erfassten Eingangsproduktdaten (L).

2. Verfahren nach dem vorangehenden Anspruch, **dadurch gekennzeichnet, dass** die Verarbeitungsgröße (V) der Ertrag (E) der Verarbeitung ist.

3. Verfahren nach einem der vorhergehenden Ansprüche, **dadurch gekennzeichnet, dass** als die Toleranzgröße (T) für die Verarbeitungsgröße (V) ein Toleranzbereich (Tb), ein oberer Toleranzwert (To) und/oder ein unterer Toleranzwert (Tu) ermittelt wird.

4. Verfahren nach einem der vorhergehenden Ansprüche, **dadurch gekennzeichnet, dass** die Verfahrensschritte für jedes der Fleischverarbeitungseinheit (4) zugeführte Eingangsfleischprodukt (8), stichprobenhaft oder zyklisch mit einer vorgegebenen Periodizität ausgeführt werden.

5. Verfahren nach einem der vorhergehenden Ansprüche, **dadurch gekennzeichnet, dass**

(a) der Toleranzgröße (T) in Abhängigkeit der Eingangsproduktdaten (L) oder der Eingangsproduktdaten (L) und Maschinenparametern mindestens ein Wert aus der Datenbank (14) zugeordnet wird,
(b) wobei von der Datenbank (14) Toleranzgrößen (T) in Abhängigkeit von Eingangsproduktdaten (L) oder von Eingangsproduktdaten (L) und Maschinenparametern gespeichert sind.

6. Verfahren nach einem der vorhergehenden Ansprüche 1-4, **dadurch gekennzeichnet, dass** die Toleranzgröße (T)

(a) aus den Eingangsproduktdaten (L) mittels eines Morphologiemodells als das mathematische Modell oder
(b) aus den Eingangsproduktdaten (L) und Maschinenparametern mittels eines Morphologiemodells und eines Maschinenmodells, zusammen als das mathematische Modell, berechnet wird.

7. Verfahren nach einem der vorhergehenden Ansprüche, **gekennzeichnet durch** die Schritte:

(a) Nachverfolgung von Eingangsfleischpodukten (8),
(b) Erfassen von Ausgangsproduktdaten (G), insbesondere Geometrie- und/oder Gewichtsdaten, des von der Fleischverarbeitungseinheit (4) weggeführten, korrespondierenden, insbesondere ausbeuterelevanten Ausgangsfleischproduktes (16) mittels einer Ausgangssensoreinheit (18) der Fleischverarbeitungsmaschine (2), wobei die Steuerungseinheit (12) mit der Ausgangssensoreinheit (18) verbunden ist, und
(c) Ermitteln der ausbeuterelevanten Verarbeitungsgröße (V) in Abhängigkeit der Eingangsproduktdaten (L) und den dazu korrespondierenden Ausgangsproduktdaten (G), insbesondere durch Differenzbildung oder Verhältnisbildung.

8. Verfahren nach dem vorangehenden Anspruch, **gekennzeichnet durch** Ausgabe

(a) eines Warnsignals mittels einer akustischen und/oder optischen Ausgabeeinheit (20), wenn die ermittelte Verarbeitungsgröße (V) außerhalb des Toleranzbereiches (Tb) ist, und/oder
(b) eines Statussignals mittels der akustischen und/oder optischen Ausgabeeinheit (20), wenn die ermittelte Verarbeitungsgröße (V) innerhalb des Toleranzbereiches (Tb) ist.

9. Verfahren nach dem vorangehenden Anspruch, **dadurch gekennzeichnet, dass** der Wert des Statussignals in Abhängigkeit von einer Abweichung zwischen der ermittelten Verarbeitungsgröße (V) und einer der Bereichsgrenzen des Toleranzbereichs (Tb) eingestellt wird.

10. Verfahren nach einem der vorhergehenden Ansprüche 7-9, **gekennzeichnet durch** die Schritte:

(a) Vorgabe einer Toleranzgröße (T) für die zu den erfassten Eingangsproduktdaten (L) korrespondierenden Verarbeitungsgröße (V) oder Ermittlung der Toleranzgröße (T) mittels der zu den erfassten Eingangsproduktdaten (L) korrespondierenden Verarbeitungsgröße (V),
(b) Bestimmen eines Datenbankparametersatzes umfassend die Eingangsproduktdaten (L), die Toleranzgröße (T) für die zugehörige Verarbeitungsgröße (V) und/oder die Maschinenparameter, und
(c) Aktualisieren der Datenbank (14) mit dem Datenbankparametersatz.

11. Verfahren nach dem vorangehenden Anspruch, **dadurch gekennzeichnet, dass** die Aktualisierung der Datenbank erfolgt,

(a) wenn die Verarbeitungsgröße (V) außerhalb oder innerhalb des Toleranzbereichs (Tb) ist, oder
(b) wenn die Verarbeitungsgröße (V) kleiner oder größer als der obere Toleranzwert (To) ist, oder
(c) wenn die Verarbeitungsgröße (V) kleiner oder größer als der untere Toleranzwert (Tu) ist.

12. Verfahren nach einem der vorhergehenden Ansprüche 10-11, **gekennzeichnet durch** einen Einrichtbetrieb der Fleischverarbeitungsmaschine (2) umfassend die Schritte

(a) Neufestsetzung der Datenbankparameter mit einem vorgegebenen Musterparameterdatensatz, und
(b) Zuführen von Referenzfleischprodukten als Eingangsfleischprodukte (8) an die Fleischverarbeitungseinheit (4).

13. Verfahren nach einem der vorhergehenden Ansprüche, **gekennzeichnet durch** ein Registrieren jeweils des zugeführten Eingangsfleischproduktes (8), dessen Eingangsproduktdaten (L) außerhalb eines vorgegebenen Produktdatentoleranzbereichs (Pe) für zuzuführende Eingangsfleischprodukte sind.

14. Verfahren nach einem der vorhergehenden Ansprüche, **gekennzeichnet durch** ein Registrieren jeweils des weggeführten Ausgangsfleischproduktes (16), dessen Ausgangsproduktdaten (G) außerhalb eines vorgegebenen Produktdatentoleranzbereichs (Pa) für wegzuführende Ausgangsfleischprodukte sind.

15. Verfahren nach einem der vorhergehenden Ansprüche 13-14, **dadurch gekennzeichnet, dass** das Warn- und/oder Statussignal für ein registriertes Eingangsfleischprodukt (8) und/oder Ausgangsfleischprodukt (16) mit einer vorgegebenen Kennzeichnung ausgegeben wird.

16. Verfahren nach einem der vorhergehenden Ansprüche 13-15, **dadurch gekennzeichnet, dass** ein zu dem registrierten Eingangsfleischprodukt (8) zugehöriger Datenbankparametersatz bei der Aktualisierung der Datenbank (14) unberücksichtigt bleibt.

17. Fleischverarbeitungsmaschine (2) zur Fleischverarbeitung mit

(a) einer Fleischverarbeitungseinheit (4) zur Verarbeitung von dieser zugeführten Eingangsfleischprodukten (8) zu Ausgangsfleischprodukten (16),
(b) einer Eingangssensoreinheit (10), und
(c) einer Steuerungseinheit (12) zur Steuerung der Fleischverarbeitungseinheit (4), wobei die Steuerungseinheit (12) mit der Eingangssensoreinheit (10) verbunden ist,
**dadurch gekennzeichnet, dass**
(d) die Fleischverarbeitungsmaschine (2) zum Ausführen des Verfahrens nach einem der vorhergehenden Ansprüche 1-16 eingerichtet und/oder ausgebildet ist.

**Claims**

1. Method for monitoring a meat processing machine (2) with

(a) a meat processing unit (4) for processing input meat products (8) fed thereto into output meat products (16),
(b) an input sensor unit (10), and
(c) a control unit (12) for controlling the meat processing unit (4), wherein the control unit (12) is connected to the input sensor unit (10), comprising the steps:
(d) feeding input meat products (8) to the meat processing unit (4),
(e) acquiring input product data (L), in particular geometric data and/or weight data, of the input meat products (8) fed to the meat processing unit (4) by means of the input sensor unit (10),
(f) determining a tolerance variable (T) for a yield-relevant processing parameter (V) by means of a mathematical model or a database (14), in each case depending on the acquired input product data (L).

2. Method according to the preceding claim, **characterized in that** the processing parameter (V) is the yield (E) of the processing.

3. Method according to any one of the preceding claims, **characterized in that** a tolerance range (Tb), an upper tolerance value (To) and/or a lower tolerance value (Tu) is determined as the tolerance variable (T) for the processing parameter (V).

4. Method according to any one of the preceding claims, **characterized in that** the method steps for the input meat products (8) fed to the meat processing unit (4) are performed on a random basis or periodically with a predefined periodicity.

5. Method according to any one of the preceding claims, **characterized in that**

(a) the tolerance variable (T) is assigned at least one value from the database (14) depending on the input product data (L) or the input product data (L) and machine parameters,
(b) wherein tolerance variables (T) are stored by the database (14) depending on input product data (L) or input product data (L) and machine parameters.

6. Method according to any one of the preceding claims 1-4, **characterized in that** the tolerance variable (T) is calculated

(a) from the input product data (L) by means of a morphology model as the mathematical model, or
(b) from the input product data (L) and machine parameters by means of a morphology model and a machine model together as the mathematical model.

7. Method according to any one of the preceding claims, **characterized by** the steps:

(a) tracking input meat products (8),
(b) acquiring output product data (G) by means of an output sensor unit (18) of the meat processing machine (2), in particular geometric data and/or weight data of the corresponding, particularly yield-relevant, output meat product (16) fed out of the meat processing unit (4), wherein the control unit (12) is connected to the output sensor unit (18), and
(c) determining the yield-relevant processing parameter (V) depending on the input product data (L) and the output product data (G) corresponding thereto, in particular by calculating the difference or calculating the ratio.

8. Method according to the preceding claim, **characterized by** issuing

(a) a warning signal by means of an acoustic and/or optical output unit (20) if the determined processing parameter (V) is outside of the tolerance range (Tb), and/or
(b) a status signal by means of an acoustic and/or optical output unit (20) if the determined processing parameter (V) is within the tolerance range (Tb).

9. Method according to the preceding claim, **characterized in that** the value of the status signal is set depending on a deviation between the determined processing parameter (V) and one of the range limits of the tolerance range (Tb).

10. Method according to any one of the preceding claims 7-9, **characterized by** the steps:

(a) specifying a tolerance variable (T) for the processing parameter (V) corresponding to the acquired input product data (L), or determining the tolerance variable (T) by means of the processing parameter (V) corresponding to the acquired input product data (L),
(b) determining a database parameter set comprising the input product data (L), the tolerance variable (T) for the associated processing parameter (V) and/or the machine parameters, and
(c) updating the database (14) with the database parameter set.

11. Method according to the preceding claim, **characterized in that** the database is updated

(a) when the processing parameter (V) is outside of or within the tolerance range (Tb), or
(b) when the processing parameter (V) is less than or greater than the upper tolerance value (To), or
(c) when the processing parameter (V) is less than or greater than the lower tolerance value (Tu).

12. Method according to any one of the preceding claims 10-11, **characterized by** a setup mode of the meat processing machine (2) comprising the steps:

(a) newly setting the database parameter with a preset sample parameter dataset, and

(b) feeding reference meat products as input meat products (8) to the meat processing unit (4).

13. Method according to any one of the preceding claims, **characterized by** registering each fed input meat product (8), whose input product data (L) is outside of a predetermined product data tolerance range (Pe) for input meat products to be fed.

14. Method according to one of the preceding claims, **characterized by** registering each output meat product (16) fed out, whose output product data (G) is outside of a predetermined product tolerance range (Pa) for output meat products to be fed out.

15. Method according to any one of the preceding claims 13-14, **characterized in that** the warning signal and/or status signal for a registered input meat product (8) and/or output meat product (16) is issued with a pre-determined identification.

16. Method according to any one of the preceding claims 13-15, **characterized in that** a database parameter set belonging to the registered input meat product (8) is disregarded when updating the database (14).

17. Meat processing machine (2) for meat processing with

(a) a meat processing unit (4) for processing input meat products (8) fed thereto into output meat products (16),
(b) an input sensor unit (10), and
(c) a control unit (12) for controlling the meat processing unit (4), wherein the control unit (12) is connected to the input sensor unit (10),
**characterized in that**
(d) the meat processing machine (2) is equipped and/or designed for performing the method according to any one of the preceding claims 1-16.

## Revendications

1. Un procédé de surveillance d'une machine de transformation de la viande (2) munie

(a) d'une unité de transformation de la viande (4) pour la transformation des produits carnés entrants (8) amenés à cette dernière en produits carnés sortants (16),
(b) d'une unité de détection d'entrée (10), et
(c) d'une unité de commande (12) pour la commande de l'unité de transformation de la viande (4), dans lequel l'unité de commande (12) est liée à l'unité de détection d'entrée (10), et comprenant les étapes suivantes :
(d) amenée des produits carnés entrants (8) jusqu'à l'unité de transformation de la viande (4),
(e) saisie de données relatives aux produits entrants (L), en particulier les données géométriques et/ou de poids, des produits carnés entrants (8) amenés jusqu'à l'unité de transformation de la viande (4) à l'aide de l'unité de détection d'entrée (10),
(f) détermination d'une valeur de tolérance (T) pour une valeur de transformation (V) pertinente en termes de rendement à l'aide d'un modèle mathématique ou d'une base de données (14), en fonction à chaque fois des données relatives aux produits entrants (L) saisis.

2. Un procédé selon la revendication précédente, **caractérisé en ce que** la valeur de transformation (V) constitue le produit (E) de la transformation.

3. Un procédé selon l'une des revendications précédentes, **caractérisé en ce qu'**une plage de tolérance (Tb), une valeur de tolérance supérieure (To) et/ou une valeur de tolérance inférieure (Tu) sont définies en tant que valeur de tolérance (T) pour la valeur de transformation (V).

4. Un procédé selon l'une des revendications précédentes, **caractérisé en ce que** les étapes du procédé sont réalisées sous forme d'échantillonnage ou de façon cyclique avec une périodicité prédéterminée pour charge produit carné entrant (8) amené à l'unité de transformation de la viande (4).

5. Un procédé selon l'une des revendications précédentes, **caractérisé en ce qu'**

(a) au moins une valeur de la base de données (14) est assignée à la valeur de tolérance (T) en fonction des données relatives aux produits entrants (L) ou des données relatives aux produits entrants (L) et des paramètres de la machine,

(b) dans lequel les valeurs de tolérance (T) sont enregistrées dans la base de données (14) en fonction des données relatives aux produits entrants (L) ou des données relatives aux produits entrants (L) et des paramètres de la machine.

**6.** Un procédé selon l'une des revendications 1 à 4, **caractérisé en ce que** la valeur de tolérance (T)

(a) est calculée à partir des données relatives aux produits entrants (L) à l'aide d'un modèle morphologique servant de modèle mathématique ou

(b) à partir des données relatives aux produits entrants (L) et des paramètres de la machine à l'aide d'un modèle morphologique et d'un modèle de la machine, servant communément de modèle mathématique.

**7.** Un procédé selon l'une des revendications précédentes, **caractérisé en ce qu'**il comprend les étapes suivantes :

(a) suivi des produits carnés entrants (8),

(b) saisie des données relatives aux produits sortants (G), en particulier des données géométriques et/ou de poids, des produits carnés sortants (16) correspondants, en particulier des produits pertinents en termes de rendement, transportés depuis l'unité de transformation de la viande (4) à l'aide d'une unité de détection de sortie (18) de la machine de transformation de la viande (2), dans laquelle l'unité de commande (12) est liée à l'unité de détection (18), et

(c) détermination de la valeur de transformation (V) pertinente en termes de rendement en fonction des données relatives aux produits entrants (L) et des données relatives aux produits sortants (G) correspondant à ces dernières, en particulier par le calcul d'une différence ou d'un rapport.

**8.** Un procédé selon la revendication précédente, caractérisé en l'émission

(a) d'un signal d'avertissement à l'aide d'une unité de sortie (20) acoustique et/ou optique, lorsque la valeur de transformation (V) déterminée dépasse la plage de tolérance (Tb), et/ou

(b) d'un signal d'état à l'aide d'une unité de sortie (20) acoustique et/ou optique, lorsque la valeur de transformation (V) déterminée respecte la plage de tolérance (Tb).

**9.** Un procédé selon la revendication précédente, **caractérisé en ce que** la valeur du signal d'état est réglée en fonction de l'écart existant entre la valeur de transformation (V) déterminée et l'une des limites de plage de la plage de tolérance (Tb).

**10.** Un procédé selon l'une des revendications 7 à 9, **caractérisé en ce qu'**il comprend les étapes suivantes :

(a) attribution préalable d'une valeur de tolérance (T) pour la valeur de transformation (V) correspondant aux données relatives aux produits entrants (L) saisies ou définition de la valeur de tolérance (T) à l'aide de la valeur de transformation (V) correspondant aux données relatives aux produits entrants (L) saisies,

(b) détermination d'un jeu de paramètres de base de données comprenant les données relatives aux produits entrants (L), la valeur de tolérance (T) pour la valeur de transformation (V) correspondante et/ou les paramètres de la machine, et

(c) mise à jour de la base de données (14) à l'aide du jeu de paramètre de base de données.

**11.** Un procédé selon la revendication précédente, **caractérisé en ce que** la mise à jour de la base de données a lieu,

(a) lorsque la valeur de transformation (V) dépasse ou respecte la plage de tolérance (Tb), ou

(b) lorsque la valeur de transformation (V) est supérieure ou inférieure à la valeur de tolérance supérieure (To), ou

(c) lorsque la valeur de transformation (V) est supérieure ou inférieure à la valeur de tolérance inférieure (Tu).

**12.** Un procédé selon l'une des revendications 10 à 11, **caractérisée en ce qu'**il comprend un mode de réglage de la machine de transformation de la viande (2) comprenant les étapes suivantes :

(a) nouvelle définition des paramètres de la base de données à l'aide d'un jeu de paramètres modèle prédéfini, et

(b) amenée de produits carnés de référence en tant que produits carnés entrants (8) jusqu'à l'unité de transformation de la viande (4).

**13.** Un procédé selon l'une des revendications précédentes, **caractérisé en ce qu'**il comprend l'enregistrement respectif des produits carnés entrants (8) amenés, dont les données relatives aux produits entrant (L) dépassent une plage de tolérance de données de produits (Pe) prédéterminée pour les produits carnés entrants à amener.

**14.** Un procédé selon l'une des revendications précédentes, **caractérisé en ce qu'**il comprend l'enregistrement respectif des produits carnés sortants (16) emmenés, dont les données relatives aux produits sortants (G) dépassent une plage de tolérance de données de produits (Pa) prédéterminée pour les produits carnés sortants à emmener.

**15.** Un procédé selon l'une des revendications 13 à 14, **caractérisé en ce que** le signal d'avertissement et/ou d'état pour un produit carné entrant (8) et/ou produit carné sortant (16) enregistré est muni d'un élément d'identification prédéterminé lors de son émission.

**16.** Un procédé selon l'une des revendications 13 à 15, **caractérisé en ce que** l'un des jeux de paramètres de base de données correspondant au produit carné entrant (8) enregistré est ignoré lors de la mise à jour de la base de données (14).

**17.** Une machine de transformation de la viande (2) pour la transformation de la viande munie

(a) d'une unité de transformation de la viande (4) pour la transformation des produits carnés entrants (8) amenés à cette dernière en produits carnés sortants (16),
(b) d'une unité de détection d'entrée (10), et
(c) d'une unité de commande (12) pour la commande de l'unité de transformation de la viande (4), dans laquelle l'unité de commande (12) est liée à l'unité de détection d'entrée (10),
**caractérisée en ce que**
(d) la machine de transformation de la viande (2) de mise en oeuvre du procédé est conçue et/ou configurée selon l'une des revendications 1 à 16.

Fig. 1

Fig. 2

EP 2 882 296 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4204843 A1
- US 6164174 A